# EUROPÄISCHE PATENTANMELDUNG

(11) **EP 0 717 082 A1**
(43) Veröffentlichungstag der Anmeldung: **19.06.1996**
(21) Anmeldenummer: 95119062.8
(22) Anmeldetag: 04.12.1995
(51) Int. Cl.: C09B 44/10, C09D 11/00

(54) **Verfahren zur Herstellung von kationischen 1,3,4-Thiadiazolfarbstoffen**

(30) Priorität: 16.12.1994 DE 4444861
(71) Anmelder: BAYER AG, 51368 Leverkusen (DE)
(72) Erfinder: Berneth, Horst, Dr., D-51373 Leverkusen (DE); Giera, Henry, Dr., D-51429 Bergisch Gladbach (DE)

(57) **Zusammenfassung**

Es wurde ein Verfahren zur Herstellung kationischer 1,3,4-Thiadiazol-Farbstoffe der Formel (I) gefunden, 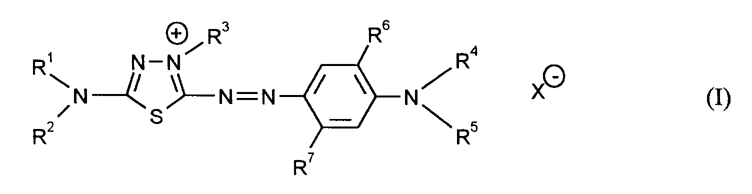
in der die verwendeten Symbole die in der Beschreibung angegebenen Bedeutungen haben,
bei dem man kationische Farbstoffe der Formel (II) 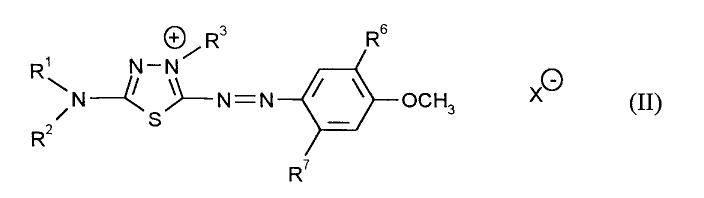
mit Aminen der Formel (III) 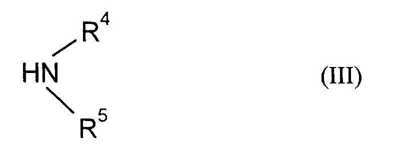
umsetzt.

## Beschreibung

Die Erfindung betrifft ein Verfahren zur Herstellung von kationischen 1,3,4-Thiadiazolfarbstoffen, sowie kationische 1,3,4-Thiadiazol-Farbstoffe an sich.

Es wurde ein Verfahren zur Herstellung kationischer 1,3,4-Thiadiazol-Farbstoffe der Formel (I) gefunden, 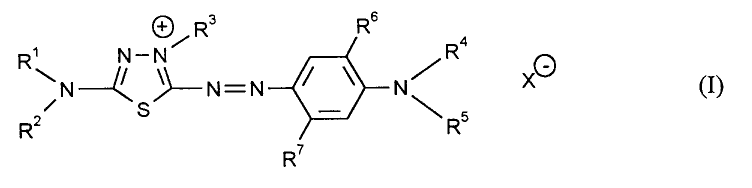
worin
- R¹ und R²: unabhängig voneinander Wasserstoff, Alkyl, Alkenyl, Cycloalkyl, Aralkyl, Aryl oder einen gegebenenfalls über Methylen oder Ethylen gebundenen heterocyclischen Rest bedeuten oder
- NR¹R²: Pyrrolidino, Piperidino, Morpholino oder Piperazino bedeutet,
- R³: Alkyl, Alkenyl, Cycloalkyl, Aralkyl oder einen gegebenenfalls über Methylen oder Ethylen gebundenen heterocyclischen Rest bedeutet,
- R⁴ und R⁵: unabhängig voneinander Wasserstoff, Alkyl, Alkenyl, Aralkyl, Aryl oder einen gegebenenfalls über Methylen oder Ethylen gebundenen heterocyclischen Ring bedeuten oder
- NR⁴R⁵: Pyrrolidino, Piperidino, Morpholino oder gegebenenfalls durch Alkyl substituiertes Piperazino bedeutet und
- R⁶ und R⁷: unabhängig voneinander Wasserstoff, C₁-C₄-Alkyl, insbesondere Methyl, oder C₁-C₄-Alkoxy, insbesondere Methoxy, bedeuten und
- X^{⊖}: ein Anion bedeutet,
das dadurch gekennzeichnet ist, daß man kationische Farbstoffe der Formel (II) 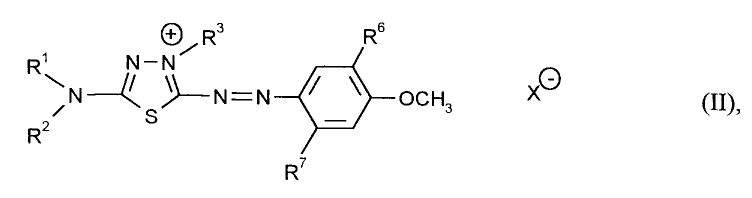
worin
R¹, R², R³, R⁶, R⁷ und X^{⊖} die oben angegebene Bedeutung besitzen, mit Aminen der Formel (III) 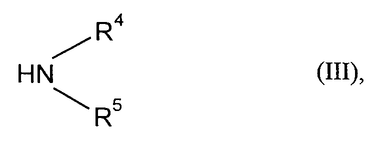
worin R⁴ und R⁵ die oben angegebene Bedeutung besitzen, umsetzt.

Kationische Farbstoffe der Formel (I), soweit sie bekannt sind, werden üblicherweise durch Quaternierung der entsprechenden Azofarbstoffe hergestellt (DE-A 4 222 257 und DE-A 2 811 258).

Aus DE-AS-1 151 612 ist bereits ein Verfahren zur Herstellung ähnlicher 1,3,4-Thiadiazol-Farbstoffe bekannt. Darin werden kationische Farbstoffe, die durch Kupplung von 1,3,4-Thiadiazolen auf gegebenenfalls substituiertes Anisol und anschließender Quaternierung erhalten werden (bspw. Beispiel 2, erste Verbindung der Spalte 9), mit Aminen umgesetzt. Eine Nacharbeitung dieses Verfahrens führte jedoch zu dem Ergebnis, daß die beschriebenen Zielfarbstoffe sich auf diese Weise praktisch nicht herstellen lassen. Als Hauptprodukt entstehen bei dieser Umsetzung lediglich chinoide Farbstoffe. Es ist daher überraschend, daß sich die Farbstoffe nach dem erfindungsgemäßen Verfahren in sehr guter Ausbeute herstellen lassen.

Eine bevorzugte Ausführungsform des erfindungsgemäßen Verfahrens ist dadurch gekennzeichnet, daß man die zur Herstellung der Farbstoffe der Formel (I) eingesetzten kationischen Farbstoffe der Formel (II) dadurch erhält, daß man Verbindungen der Formel (IV) 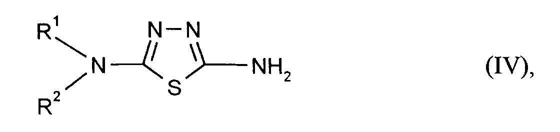
a) diazotiert,
b) auf Methoxybenzole der Formel (V) kuppelt und 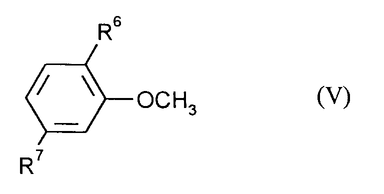
c) den so erhaltenen Farbstoff der Formel (VI) 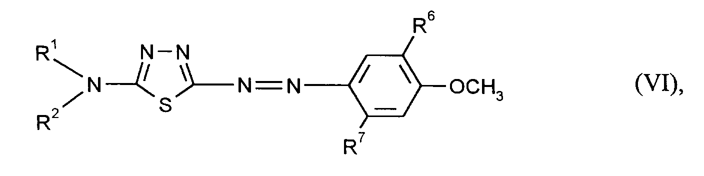 worin R¹, R², R⁶ und R⁷ die oben angegebene Bedeutung besitzen, mit Quaternierungsmitteln der Formel (VII)

   R³X (VII)

   oder solchen Quaternierungsmitteln, die unter Reaktionsbedingungen Verbindungen der Formel (VII) bilden, worin R³ und X die oben angegebene Bedeutung besitzen, umsetzt.

In einer besonders bevorzugten Ausführungsform des erfindungsgemäßen Verfahrens werden die Verbindungen der Formeln (II) und/oder (VI) nicht zwischenisoliert.

Weiterhin bevorzugt ist das erfindungsgemäße Verfahren zur Herstellung von 1,3,4-Thiadiazol-Farbstoffen der Formel (I), worin
- R¹ und R²: unabhängig voneinander Wasserstoff, unsubstituiertes oder durch Halogen, C₁-C₄-Alkoxy, Hydroxy, Cyano, Hydroxycarbonyl, C₁-C₄-Alkoxycarbonyl oder Phenyl substituiertes C₁-C₈-Alkyl oder C₂-C₆-Alkenyl, das jeweils unverzweigt oder verzweigt ist, C₄-C₇-Cycloalkyl oder unsubstituiertes oder durch bis zu drei Resten aus der Reihe Halogen, C₁-C₄-Alkyl, C₁-C₄-Alkoxy, Cyano oder Nitro substituiertes Phenyl, Tetramethylensulfonyl, Pyridylmethyl oder Pyridylethyl bedeuten oder
- NR¹R²: Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
- R³: unsubstituiertes oder durch Halogen, C₁-C₄-Alkoxy, Hydroxy, Cyano, C₁-C₄-Alkoxycarbonyl oder Phenyl substituiertes C₁-C₈-Alkyl oder C₂-C₆-Alkenyl bedeutet, das jeweils unverzweigt oder verzweigt ist, C₄-C₇-Cycloalkyl, Pyridylmethyl oder Pyridylethyl bedeutet,
- R⁴ und R⁵: unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl oder C₂-C₆-Alkenyl bedeutet, das jeweils unverzweigt oder verweigt ist oder unsubstituiertes oder durch bis zu drei Resten aus der Reihe Halogen, C₁-C₄-Alkyl, C₁-C₄-Alkoxy, Cyano oder Nitro substituiertes Phenyl, Tetramethylensulfonyl, Pyridylmethyl oder Pyridylethyl bedeuten, oder
- NR⁴R⁵: Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
- R⁶: Wasserstoff, Methyl oder Methoxy bedeutet,
- R⁷: Wasserstoff oder Methyl bedeutet und
- X^{⊖}: ein Anion bedeutet.

Alle Alkyl-, Alkenyl-, Cycloalkyl-, Aralkyl-, Aryl-, Alkoxy- und heterocyclischen Reste sind im Sinne dieser Anmeldung gegebenenfalls mit nichtionogenen Substituenten, Carboxylgruppen, Ammoniumgruppen und/oder Pyridiniumgruppen substituiert.

Nichtionogene Substituenten sind beispielsweise die in der Farbstoffchemie üblichen, nicht dissoziierenden Substituenten, wie Cyano, Hydroxy, Fluor, Chlor, Brom, Nitro, Alkyl, Monoalkylamino, Dialkylamino, Alkoxy, Phenyl, Acyloxy, Acylamino, Alkoxycarbonyl und Alkoxycarbonyloxy.

Alkylreste, auch solche in Alkoxy- und Aralkylresten, sind beispielsweise solche mit 1 bis 8, vorzugsweise 1 bis 4 C-Atomen. Sie können auch verzweigt sein.

Alkenylreste sind beispielsweise solche mit 2 bis 6, vorzugsweise 2 bis 3 C-Atomen.

Cycloalkylreste sind beispielsweise solche mit 4 bis 7, vorzugsweise 5 bis 6 C-Atomen.

Halogen steht vorzugsweise für Fluor, Chlor oder Brom.

Arylreste, auch solche in Aralkylresten, sind vorzugsweise Phenylreste, die gegebenenfalls durch 1 bis 3 der oben beschriebenen nichtionogenen Substituenten und/oder eine Carboxylgruppe substituiert sein können.

Heterocyclische Reste sind beispielsweise Thienyl, Furyl und Pyridyl, sowie ihre teilweise oder vollständig hydrierten Derivate. Sie können gegebenenfalls 1 bis 3 der oben beschriebenen nichtionogenen Substituenten enthalten.

Als Anionen sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- und Tetrachlorozinkat, Tetrachloroferrat und Anionen gesättigter oder ungesättigter aliphatischer, cycloaliphatischer, aromatischer oder heterocyclischer Carbon- und Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikotinsäure, Methansulfonat, Ethansulfonat, Benzolsulfonat, Chlorbenzolsulfonat, Toluolsulfonat und Hexafluorosilikat.

Wenn es sich um mehrwertige Anionen handelt, z.B. um Sulfat oder Oxalat, dann steht in Formel (I) X^{⊖} für ein Äquivalent solch eines mehrwertigen Anions.

Die erwähnten Diazotierungen der 2-Amino-1,3,4-thiadiazole der Formel (IV) können in an sich bekannter Weise durchgeführt werden, beispielsweise mit Nitrosylschwefelsäure in 80 bis 90 Gew.-% Phosphorsäure oder in Gemischen solcher Phosphorsäuren mit Essigsäure, Propionsäure und/oder Schwefelsäure oder mit Natriumnitrit in wäßriger Mineralsäure, z.B. Salzsäure oder Schwefelsäure. Vorteilhaft ist die Durchführung der Diazotierung mit Nitrosylschwefelsäure in einer Mischung aus ca. 85 Gew.-% Phosphorsäure, Eisessig und 45 bis 50 Gew.-% Schwefelsäure.

Die erwähnten Kupplungen auf die Methoxybenzole der Formel (V) werden vorzugsweise in einem sauren Medium, das wäßrig oder wäßrig-organisch sein kann, durchgeführt. Vorteilhaft ist die Verwendung von Essigsäure zum Lösen der Methoxybenzole. In diese Lösung wird dann vorzugsweise die wie oben beschrieben hergestellte Diazotierung eingetragen. Die Kupplung erfolgt bei 0 bis 20°C, vorteilhaft bei 5 bis 10°C. Anschließend läßt man die Reaktionsmischung auf Raumtemperatur erwärmen.

Die entstehenden Farbstoffe der Formel (VI) fallen entweder aus dem Reaktionsmedium direkt aus oder können durch Verdünnen mit Wasser oder Alkoholen wie Methanol oder Ethanol ausgefällt werden. Sie lassen sich dann z.B. durch Abfiltrieren als Feststoffe isolieren.

Es kann aber auch direkt in dem Reaktionsmedium die Quaternierung angeschlossen werden. Es ist dann jedoch vorteilhaft, vor Zugabe des Quaternierungsmittels der Formel (VII) einen pH-Wert zwischen 2 und 9, vorzugsweise 4 und 7 einzustellen. Dazu werden basische Substanzen verwendet, beispielsweise Natriumacetat, Magnesiumoxid oder Natronlauge. Dabei kann es vorteilhaft sein, mit einem der für die Quaternierung beschriebenen Lösungsmitteln zu verdünnen, vorteilhaft mit solchen, die sich mit dem Reaktionsmedium mischen.

Als quaternierende Mittel kommen solche der Formel (VII) infrage und solche, die unter Reaktionsbedingungen formal Verbindungen der Formel (VII) ergeben. Beispiele sind Alkylhalogenide, Halogenacetamide, β-Halogenpropionitrile, Halogenhydrine, Alkylenoxide, Alkylester der Schwefelsäure, Alkylester organischer Sulfonsäuren, Nitrile, Amide und Ester von α,β-ungesättigten Carbonsäuren, Alkoxyalkylhalogenide und Vinylpyridine. Als Beispiele seien genannt: Methylchlorid, Methylbromid, Methyliodid, Benzylchlorid, Benzylbromid, Chloracetamid, β-Chlorpropionitril, Ethylenchlorhydrin, Dimethylsulfat, Diethylsulfat, Benzolsulfonsäuremethylester, Benzolsulfonsäureethylester, Toluolsulfonsäuremethylester, Toluolsulfonsäureethylester, Toluolsulfonsäurepropylester, Allylchlorid, Allylbromid, Ethylenoxid, Propylenoxid, Acrylnitril, Acrylsäure, Acrylamid, Acrylsäuremethylester, 2- und 4-Vinylpyridin, Sulfolen (= 1,1-Dioxo-2,5-dihydrothiophen), Epichlorhydrin, Styroloxid, Methylphosphonsäuredimethylester und Allylphosphorsäureester.

Besonders vorteilhaft sind die Alkylester der Schwefelsäure und von organischen Sulfonsäuren wie Dimethylsulfat, Diethylsulfat, Methansulfonsäuremethylester, Trifluormethansulfonsäuremethylester, Benzolsulfonsäuremethylester, Toluolsulfonsäuremethylester.

Die Quaternierungen können z.B. in einem indifferenten organischen Lösungsmittel, in Wasser oder in Mischungen davon erfolgen, wobei gegebenenfalls säurebindende Mittel, wie Magnesiumoxid, Natriumcarbonat, Natriumhydrogencarbonat, Calciumcarbonat, Natriumacetat oder Kaliumacetat, zugesetzt werden können.

Geeignete organische Lösungsmittel sind beispielsweise Kohlenwasserstoffe, Chlorkohlenwasserstoffe, Nitrokohlenwasserstoffe, Ketone, Carbonsäuren, Carbonsäureanhydride oder dipolar aprotische Lösungsmittel, wie Benzol, Toluol, Tetrachlorethan, Mono- oder Dichlorbenzol, Nitrobenzol, Ameisensäure, Essigsäure, Propionsäure, Milchsäure, Acetanhydrid, Aceton, Butanon, Acetonitril, Propionitril, Methoxypropionitril, Dimethylformamid, Tetramethylharnstoff, N-Methylpyrrolidon, γ-Butyrolacton, Formaldehyddiethylacetal und Dimethylsulfoxid.

Vorteilhaft ist die Verwendung von Eisessig/Natriumacetat, Ameisensäure/Eisessig/Natriumacetat, Formaldehyddiethylacetal/Magnesiumoxid oder γ-Butyrolacton/Magnesiumoxid.

Die entstehenden Farbstoffe der Formel (II) fallen in der Regel entweder aus dem Reaktionsmedium direkt aus und können z.B. durch Abfiltrieren isoliert werden oder können bei der Verwendung von mit Wasser mischbaren Lösungsmitteln als feste, abfiltrierbare Produkte durch Verdünnen mit Wasser und gegebenenfalls durch Zugabe wasserlöslicher Salze wie Natrium- oder Kaliumchlorid, Natrium- oder Kaliumbromid, gegebenenfalls in Gegenwart von Zinkchlorid oder Eisenchlorid erhalten werden.

Vorteilhaft ist es, die Farbstoffe der Formel (II) nicht zu isolieren, sondern direkt die Umsetzung mit den Aminen der Formel (III) anzuschließen.

Die Umsetzung der Farbstoffe der Formel (II) mit Aminen der Formel (III) kann ebenfalls in organischen Lösungsmitteln, in Wasser oder in Mischungen davon erfolgen. Geeignete Lösungsmittel sind die oben bei der Quaternierung beschriebenen sowie Alkohole.

Eine besonders bevorzugte Ausführungsform des erfindungsgemäßen Verfahrens ist dadurch gekennzeichnet, daß man die Umsetzung der kationischen Farbstoffe der Formel (II) mit Aminen der Formel (III) in Wasser und/oder einem polaren, mit Wasser mischbaren Lösungsmittel bei einer Temperatur zwischen 0°C und der Siedetemperatur des Reaktionsmediums durchführt.

Weiterhin bevorzugt ist eine Ausführungsform des erfindungsgemäßen Verfahrens, die dadurch gekennzeichnet ist, daß die kationischen Farbstoffe der Formel (II) mit 1 bis 3 Mol-Äquivalenten eines Amins der Formel (III) umgesetzt werden. Das erfindungsgemäße Verfahren wird vorzugsweise bei einem pH-Wert des Reaktionsmediums von 2 bis 9, insbesondere bei pH 3 bis 7 durchgeführt.

Vorteilhafte Lösungsmittel sind neben Wasser die polaren, mit Wasser mischbaren Lösungsmittel aus den Reihen der Nitrile, Amide, Ester, Carbonsäuren, Ketone, Sulfoxide und Alkohole wie Acetonitril, Methoxypropionitril, Dimethylformamid, N-Methylpyrrolidon, γ-Butyrolacton, Essigsäure, Propionsäure, Aceton, Butanon, Dimethylsulfoxid, Methanol oder Ethanol. Bevorzugt sind Wasser, γ-Butyrolacton, Essigsäure oder Methanol sowie deren Mischungen.

Die Umsetzungen der kationischen Farbstoffe der Formel (II) mit Aminen der Formel (III) erfolgen vorzugsweise zwischen Raumtemperatur und der Siedetemperatur des Reaktionsmediums, vorteilhaft bei 30 bis 60°C. Die Amine der Formel (III) werden äquimolar oder im Überschuß eingesetzt. Vorteilhaft sind 1 bis 3 Mol-Äquivalente des Amins der Formel (III), besonders vorteilhaft 1,1 bis 1,7 Mol-Äquivalente pro Mol Farbstoff der Formel (II). Der pH-Wert des Mediums kann zwischen 2 und 10 liegen, vorteilhaft in der Nähe des pK-Wertes des Amins der Formel (III). Besonders vorteilhaft ist es, den pH-Wert im schwach sauren Bereich, insbesondere zwischen 4 bis 7 zu halten.

Die entstehenden Farbstoffe der Formel (I) fallen in der Regel entweder aus dem Reaktionsmedium direkt aus und können z.B. durch Abfiltrieren isoliert werden oder können bei der Verwendung von mit Wasser mischbaren Lösungsmitteln als feste, abfiltrierbare Produkte durch Verdünnen mit Wasser und gegebenenfalls durch Zugabe wasserlöslicher Salze wie Natrium- oder Kaliumchlorid, Natrium- oder Kaliumbromid, gegebenenfalls in Gegenwart von Zinkchlorid oder Eisenchlorid erhalten werden.

Ein weiterer Gegenstand der Erfindung sind kationische 1,3,4-Thiadiazol-Farbstoffe der Formel (I), worin
- R⁴: Wasserstoff, C₁-C₄-Alkyl, Cyanethyl, Hydroxyethyl oder Hydroxypropyl bedeutet,
- R⁵: Cyanethyl, C₁-C₄-Alkoxycarbonylethyl, Hydroxycarbonylmethyl oder Tetramethylensulfonyl bedeutet oder
- NR⁴R⁵: Pyrrolidino, Piperidino, Morpholino oder Piperazino bedeutet,
- R⁶: Methoxy und R⁷ Wasserstoff bedeuten oder
R⁶ Wasserstoff und R⁷ Methyl bedeuten, und die Reste R¹, R², R³ und X^{⊖} die oben angegebene Bedeutung besitzen, R¹ oder R² aber nicht für Aryl steht und R⁵ nicht für Cyanethyl steht, wenn R⁷ für Methyl und R⁴ für Wasserstoff oder C₁-C₄-Alkyl stehen.

Bevorzugt sind dabei solche Farbstoffe der Formel (I),
worin
- R¹ und R²: unabhängig voneinander Wasserstoff, Methyl, Ethyl, Propyl, 2-Propyl, Cyanethyl, Hydroxyethyl, Hydroxypropyl, Methoxyethyl, Benzyl, Allyl, Cyclopentyl, Cyclohexyl oder Tetramethylensulfonyl bedeuten oder
- NR¹R²: Pyrrolidino, Piperidino oder Morpholino bedeutet,
- R³: Methyl, Ethyl, Cyanethyl, Hydroxyethyl, Hydroxypropyl oder Benzyl bedeutet,
- R⁴: Wasserstoff, Methyl, Ethyl, Cyanethyl oder Hydroxyethyl bedeutet,
- R⁵: Cyanethyl oder Tetramethylensulfonyl bedeutet oder
- NR⁴R⁵: Pyrrolidino, Piperidino oder Morpholino bedeutet,
- R⁶: Methoxy und R⁷ Wasserstoff bedeuten und
- X^{⊖}: ein Anion bedeutet.

Die erfindungsgemäßen bzw. die nach dem erfindungsgemäßen Verfahren erhältlichen Farbstoffe der Formel (I) eignen sich hervorragend zum Färben und Bedrucken von kationisch färbbaren Fasern, vorzugsweise von Polymerisaten und Mischpolymerisaten des Acrylnitrils und Dicyanoethylens, sowie von sauer modifizierten Fasern aus Polyamid und Polyester, wobei echte Farbtöne erhalten werden. Die Farbstoffe können auch Verwendung finden zum Färben und Bedrucken von tannierten Zellulosematerialien, Papier, Seide und Leder. Sie sind weiter geeignet zur Herstellung von Schreibflüssigkeiten, Stempelflüssigkeiten, Kugelschreiberpasten und ink-jet-Tinten und lassen sich auch im Gummidruck verwenden.

Das Färben von beispielsweise Polymerisaten und Mischpolymerisaten des Acrylnitrils kann z.B. aus schwach saurer Flotte erfolgen, wobei man in das Färbebad vorzugsweise bei 40 bis 60°C eingeht und dann bei Kochtemperatur färbt. Man kann auch unter Druck bei Temperaturen über 100°C färben. Des weiteren lassen sich mit den erfindungsgemäßen Farbstoffen Spinnlösungen zum Färben polyacrylnitrilhaltiger Fasern herstellen.

Die Färbungen der erfindungsgemäßen Farbstoffe der Formel (I) auf Materialien aus Polyacrylnitril zeichnen sich durch sehr gute Licht-, Naß- und Reibechtheiten und durch eine hohe Affinität zur Faser auf.

Erfindungsgemäße Farbstoffe können einzeln, in Mischungen untereinander oder in Mischungen mit anderen Farbstoffen angewendet werden.

Die vorliegende Erfindung betrifft schließlich auch Polymerisate und Mischpolymerisate des Acrylnitrils und Dicyanoethylens, sauer modifiziertes Polyamid und Polyester, tannierte Zellulosematerialien, Papier, Seide, Leder, Kugelschreiberpasten, Schreibflüssigkeiten, Stempelflüssigkeiten und ink-jet-Tinten, die dadurch gekennzeichnet sind, daß sie mindestens einen erfindungsgemäßen kationischen 1,3,4-Thiadiazolfarbstoff der Formel (I) enthalten.

### Beispiele

### Beispiel 1

46 g des 2-Amino-1,3,4-thiadiazols der Formel (IV) mit R¹ = Methyl und R² = 2-Cyanethyl wurden in 400 ml Eisessig gelöst. 100 ml 85 Gew.-% Phosphorsäure und 75 ml 48 Gew.-% Schwefelsäure wurden zugesetzt. Bei 0 bis 5°C tropften 85 g Nitrosylschwefelsäure dazu. Nach 60 Minuten bei dieser Temperatur wurde die Diazotierung zu einer Lösung von 34,5 g 1,2-Dimethoxybenzol (Veratrol) in 300 ml Eisessig bei 10 bis 15°C getropft. Dann wurde langsam auf Raumtemperatur erwärmt und über Nacht gerührt. Die Suspension wurde auf eine Mischung aus 1000 ml Wasser und 500 g Eis ausgetragen. Nach Erreichen von Raumtemperatur wurde abgesaugt, mit Wasser gewaschen und getrocknet. Man erhielt 50,4 g (60 % der Theorie) des Farbstoffs der Formel (VI) mit R¹ = Methyl und R² = 2-Cyanethyl als gelbes Pulver.

5,0 g dieses Farbstoffs wurden in 60 ml γ-Butyrolacton gelöst. 0,6 g Magnesiumoxid wurden zugesetzt. Bei 40°C tropften 2,8 ml Dimethylsulfat dazu. Es wurde 25 Stunden bei 40 bis 45°C gerührt. Der Farbstoff der Formel (II) mit R¹ = R³ = Methyl, R² = 2-Cyanethyl und X^{⊖} = Methosulfat wurde quantitativ (gemäß DC-Analytik) gebildet.

Nach Abkühlen auf Raumtemperatur tropften zu dieser violetten Lösung 1,8 ml Pyrrolidin, wobei die Temperatur bis auf 44°C anstieg. 3 Stunden wurde bei 40°C gerührt und auf eine Mischung aus 200 ml Wasser und 20 ml Essigsäure ausgetragen und mit 1 g A-Kohle geklärt. Durch Zusatz von 100 ml einer 2-molaren Zinkchloridlösung wurde der Farbstoff ausgefällt. Der Farbstoff wurde abfiltriert mit 15 Gew.-% Natriumchloridlösung gewaschen und getrocknet. Man erhielt 5,7 g (59 % der Theorie) des Farbstoffs der Formel 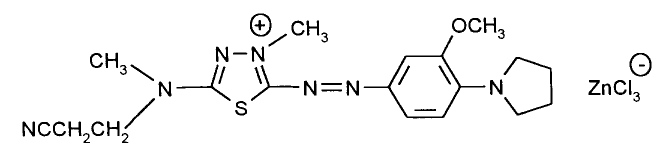
Der Farbstoff hat in Methanol/Eisessig 9:1 ein Absorptionsmaximum bei 612 nm. Er färbt Polyacrylnitril in einem farbstarken, lichtechten, grünstichigen Blau.

### Beispiel 2

20,6 g des 2-Amino-1,3,4-thiadiazols der Formel (IV) mit R¹ = R² = Isopropyl wurden in 200 ml Eisessig gelöst. 40 ml 85 Gew.-% Phosphorsäure und 30 ml 48 Gew.-% Schwefelsäure wurden zugesetzt. Bei 0 bis 5°C tropften 34 g Nitrosylschwefelsäure dazu.

Nach 30 Minuten bei dieser Temperatur wurde die Diazotierungslösung zu einer Lösung von 13,8 g 1,2-Dimethoxybenzol (Veratrol) in 120 ml Eisessig bei 10°C getropft. Dann wurde langsam auf Raumtemperatur erwärmt und über Nacht gerührt. Die Suspension wurde auf eine Mischung aus 400 ml Wasser und 200 g Eis ausgetragen, wobei nach und nach 300 g Eis zugesetzt wurden. Nach Erreichen von Raumtemperatur wurde abgesaugt, mit Wasser gewaschen und getrocknet. Man erhielt 31,1 g (89 % der Theorie) des Farbstoffs der Formel (VI) mit R¹ = R² = Isopropyl, R⁶ = Methoxy und R⁷ = Wasserstoff als gelbes Pulver.

9,0 g dieses Azofarbstoffs wurden in 120 ml Formaldehyddiethylacetal suspendiert. Bei 35°C tropften 5 ml Dimethylsulfat dazu. Anschließend wurde 1 g Magnesiumoxid zugesetzt. Über Nacht wurde bei 45°C gerührt, dann mit 3 g Dimethylsulfat versetzt und erneut über Nacht bei 55°C gerührt. Nach dem Abkühlen wurde abgesaugt, mit Formaldehyddiethylacetal gewaschen und getrocknet. Man erhielt 6,2 g (50 % der Theorie) des Farbstoffs der Formel (II) mit R¹ = R² = Isopropyl, R³ = Methyl und X^{⊖} = Methosulfat als violettes Pulver.

5,2 g dieses Farbstoffs wurden in 60 ml Methanol gelöst und mit 2,3 g 3-Aminopropionitril versetzt. 1,5 Stunden bei 40°C gerührt, abgekühlt, mit 250 ml Wasser verdünnt und mit 2 g A-Kohle geklärt. 30 ml 2-molare Zinkchloridlösung und 450 ml gesättigte Kochsalzlösung wurden zugesetzt. Nach dem Abfiltrieren, Waschen mit 15 Gew.-% Kochsalzlösung und Trocknen erhielt man 2,9 g (52 % der Theorie) des Farbstoffs der Formel 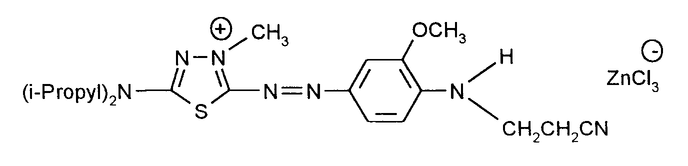
Der Farbstoff hat in Methanol/Eisessig 9/1 ein Absorptionsmaximum bei 589 nm. Er färbt Polyacrylnitril in einem farbstarken, lichtechten, leicht rotstichigen Blau.

### Beispiel 3

6,0 g des Azofarbstoffs der Formel (VI) mit R¹ = R² = Isopropyl aus dem Beispiel 2 wurden in 30 ml Acrylsäure 3 Tage bei 30°C gerührt. Dann wurde auf 130 ml Wasser ausgetragen und unter Zusatz von 70 ml 2-molarer Zinkchloridlösung gefällt. Nach dem Absaugen, Waschen mit 15 Gew.-% Natriumchloridlösung und Trocknen erhielt man 8,5 g (74 % der Theorie) rotes Pulver der Formel (II) mit R¹ = R² = Isopropyl, R³ = Hydroxycarbonylethyl und X^{⊖} = ZnCl₃.

4,0 g dieses Farbstoffs wurden in 50 ml Methanol mit 0,9 g Anilin 4 Stunden bei 30°C gerührt. Unter Zusatz von Isopropanol und Diisopropylether wurde der Farbstoff ausgefällt abgesaugt, mit Diisopropylether gewaschen und getrocknet. Man erhielt 2,96 g (68 % der Theorie) des Farbstoffs der Formel 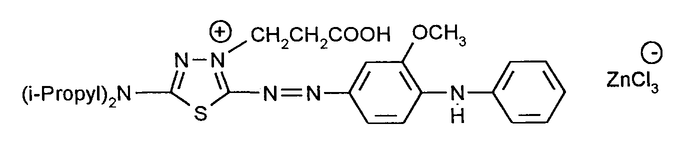
Er hat in Methanol/Eisessig 9/1 ein Absorptionsmaximum bei 614 nm und färbt Polyacrylnitril in einem lichtechten, grünstichigen Blau.

### Beispiel 4 (Vergleich des erfindungsgemäßen Verfahrens mit dem aus DE-AS 1 151 612)

### Herstellung des Azofarbstoffs

### a) erfindungsgemäß

Gemäß Beispiel 2 wurden 20,6 g des 2-Amino-1,3,4-thiadiazols der Formel (IV) mit R¹ = R² = Isopropyl diazotiert und auf 1,3 g 1,2-Dimethoxybenzol (Veratrol) gekuppelt. Man erhielt wie in Beispiel 2 31,1 g (89 % der Theorie) des Farbstoffs der Formel (VI) mit R¹ = R² = Isopropyl.

### b) gemäß DE-AS 1 151 612

Es wurde genauso wie oben gearbeitet, nur wurden als Diazokomponente 14,7 g 2-Amino-5-methylthio-1,3,4-thiadiazol eingesetzt. Man erhielt 21,9 g (74 % der Theorie) des Farbstoffs der Formel 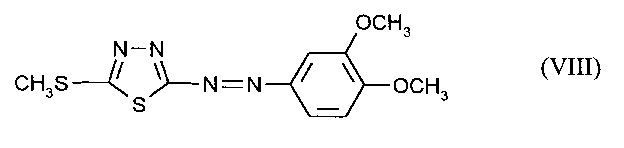
als gelbes Pulver.

### Quaternierung

### a) erfindungsgemäß

13,9 g des obigen Farbstoffs der Formel (VI) wurden in 150 ml Eisessig mit 3,3 g wasserfreiem Natriumacetat und 7,6 ml Dimethylsulfat versetzt und 17 Stunden bei 35°C gerührt. Der Farbstoff der Formel (VI) war vollständig verbraucht (bestimmt durch DC). Nach Abkühlen auf Raumtemperatur wurde mit 200 ml konzentrierter Natriumchloridlösung und anschließend mit 100 ml 2-molarer Zinkchloridlösung versetzt. Die Suspension wurde abgesaugt, mit 15 Gew.-% Natriumchloridlösung gewaschen und getrocknet. Man erhielt 22,4 g (94 % der Theorie) des Farbstoffs der Formel 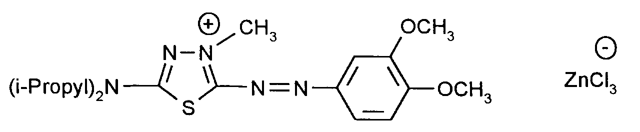
Es wurde ca. 2 % des chinoiden Nebenproduktes der Formel 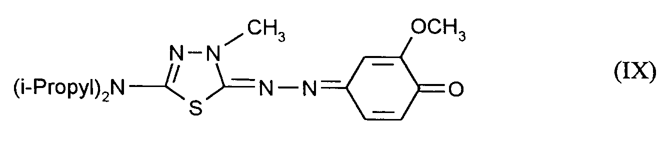
gebildet (bestimmt durch DC).

### b) gemäß DE-AS 1 151 612

11,8 g des Farbstoffs der Formel (VIII) wurden wie unter a) beschrieben mit Dimethylsulfat umgesetzt (nach 17 Stunden war auch hier der Farbstoff der Formel (VIII) vollständig verbraucht) und aufgearbeitet. Man erhielt 12,2 g (58 % der Theorie) eines Farbstoffgemischs, das gemäß Dünnschichtchromatogramm ca. 45 % des gewünschten Farbstoffs der Formel (X) 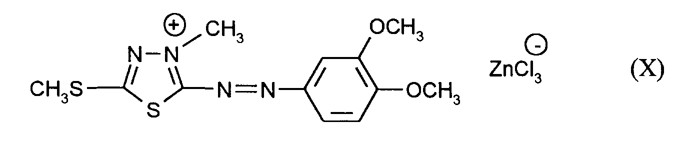
und ca. 45 % des chinoiden Nebenprodukts der Formel (XI) 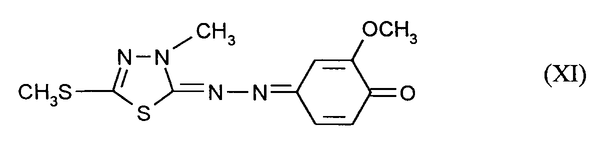
sowie in geringerem Maße weitere 3 Nebenprodukte enthielt, deren Strukturen jedoch nicht aufgeklärt wurden. Die Ausbeute des Farbstoffs der Formel (X) betrug also nur ca. 26 % der Theorie.

### Nukleophile Substitution

### a) erfindungsgemäß

11,8 g des obigen Farbstoffs der Formel (II) wurden in 100 ml Methanol mit 0,5 ml Eisessig und 3,9 g Piperidin versetzt. Es wurde 18 Stunden bei Raumtemperatur und 4 Stunden bei 40°C gerührt und dann abgekühlt. Der Farbstoff der Formel (II) war fast vollständig verbraucht. 100 ml konzentrierter Natriumchloridlösung und 120 ml einer 2-molaren Zinkchloridlösung wurden zugesetzt. Der Farbstoff schied sich dabei als Öl ab. Das Öl wurde abgetrennt, in 50 ml Eisessig und 100 ml Wasser gelöst und mit 120 ml einer 2-molaren Zinkchloridlösung gefällt. Man erhielt erneut ein Öl, das abgetrennt und getrocknet wurde. Man erhielt 5,9 g (49 % der Theorie) des Farbstoffs der Formel (I)

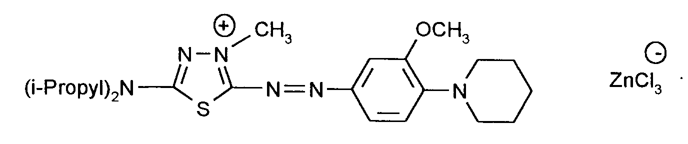

### b) gemäß DE-AS 1 151 612

10,5 des obigen Farbstoffgemisches der Formeln (X) und (XI) wurden wie unter a) beschrieben umgesetzt. Der Farbstoff der Formel (X) war vollständig verbraucht. Die Aufarbeitung wie unter a) beschrieben ergab anfangs ein schmieriges Produkt, dann ein festes Pulver, das getrocknet wurde. Man erhielt 5,7 g eines Farbstoffgemischs, das neben ca. 2 % des Azofarbstoffs der Formel (VIII) und einer geringen Verunreinigung ausschließlich aus dem chinoiden Farbstoff der Formel (XI) bestand. Die Ausbeute des Ziel-Farbstoffs der Formel (XII) 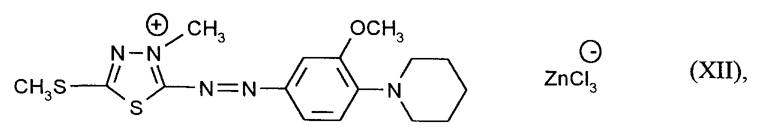
der einem Farbstoff der Tabelle zu Beispiel 2 der DE-AS 1 151 612 entspricht, betrug demnach 0 %. Nach Dünnschichtchromatographie hatte sich dieser Farbstoff der Formel (XII) während der Reaktion in geringfügigem Maße gebildet, zersetzte sich aber rasch wieder.

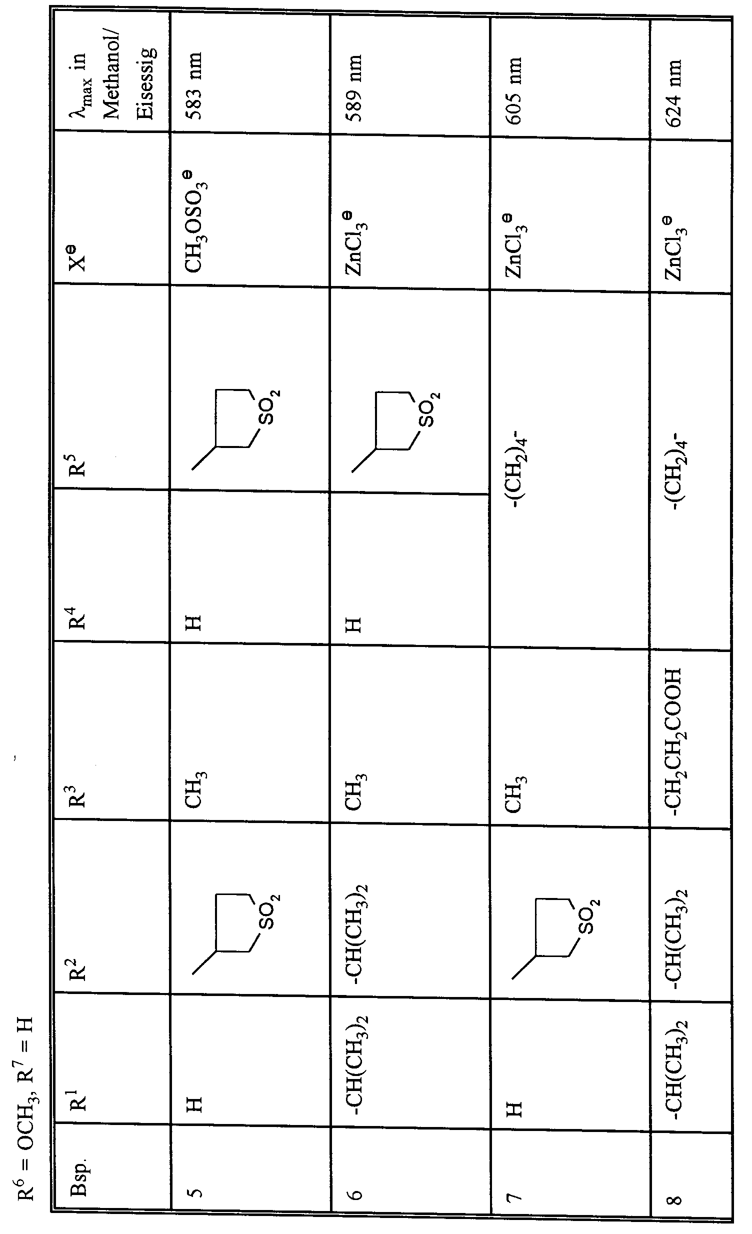

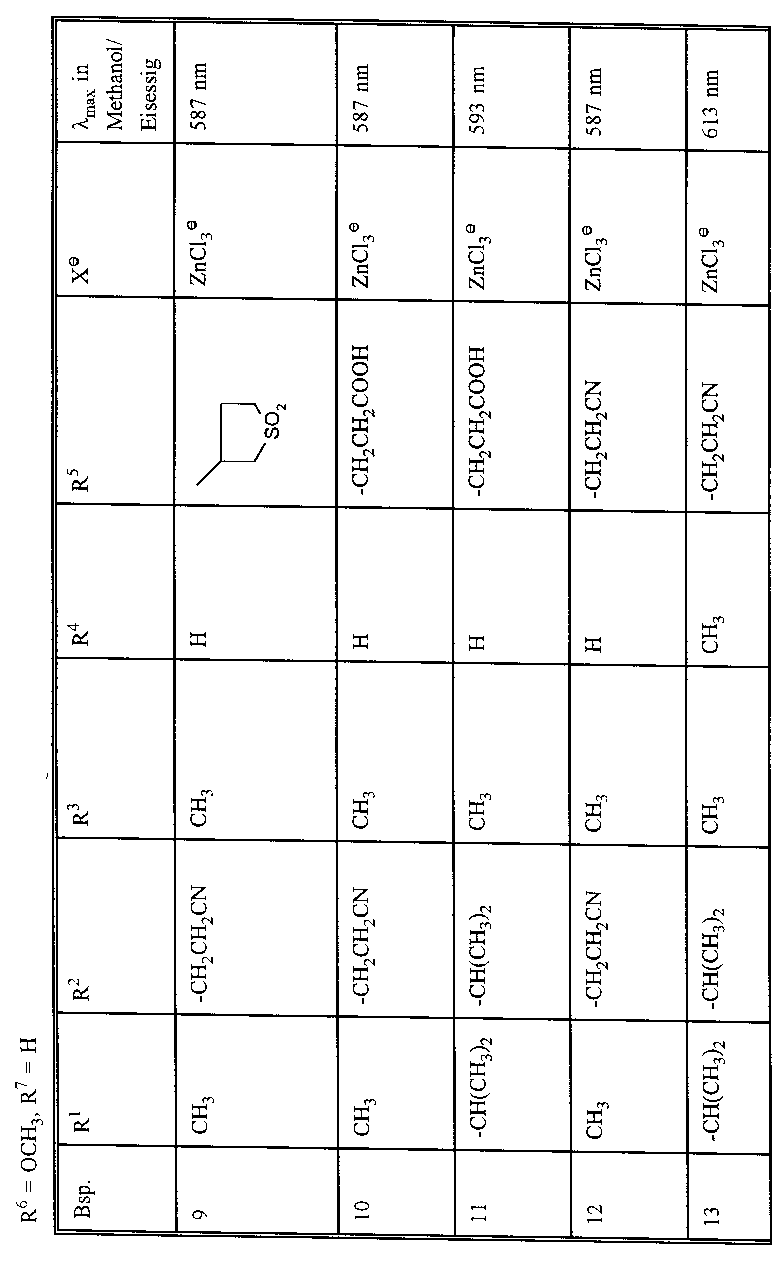

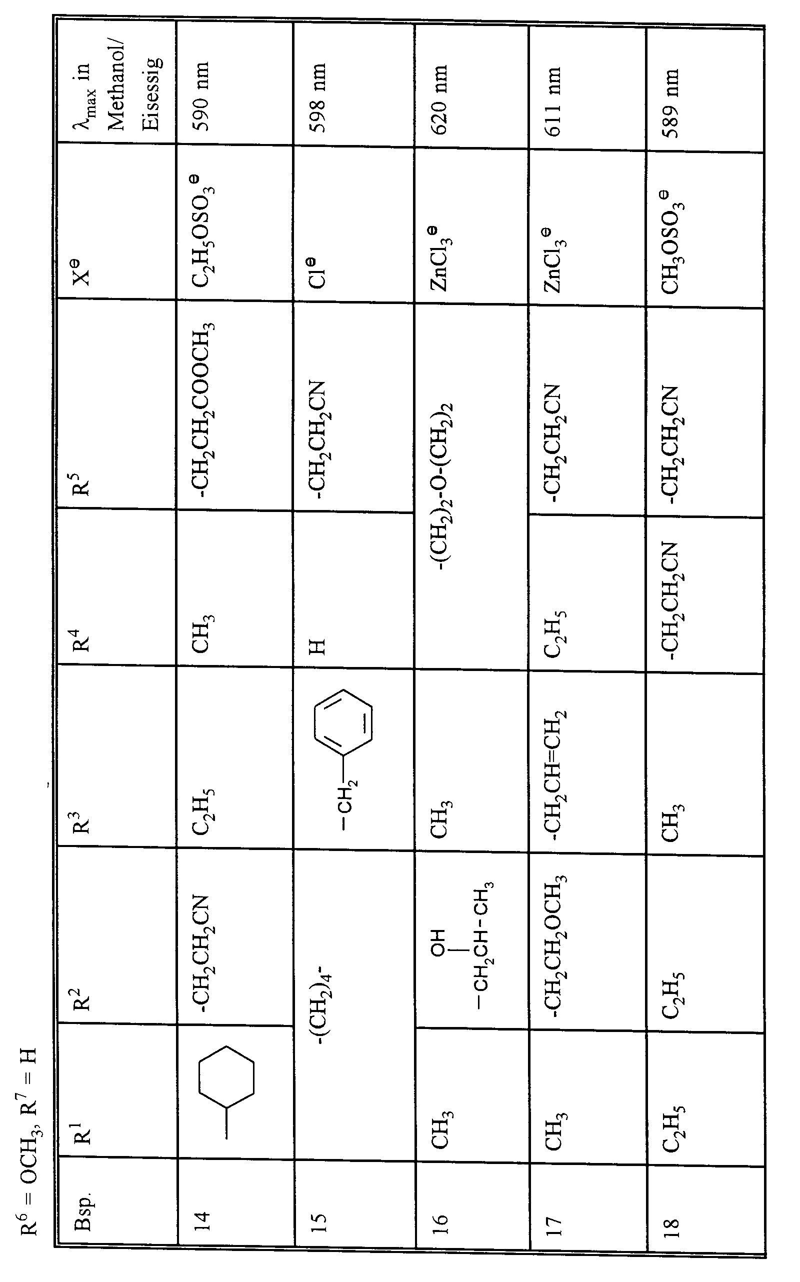

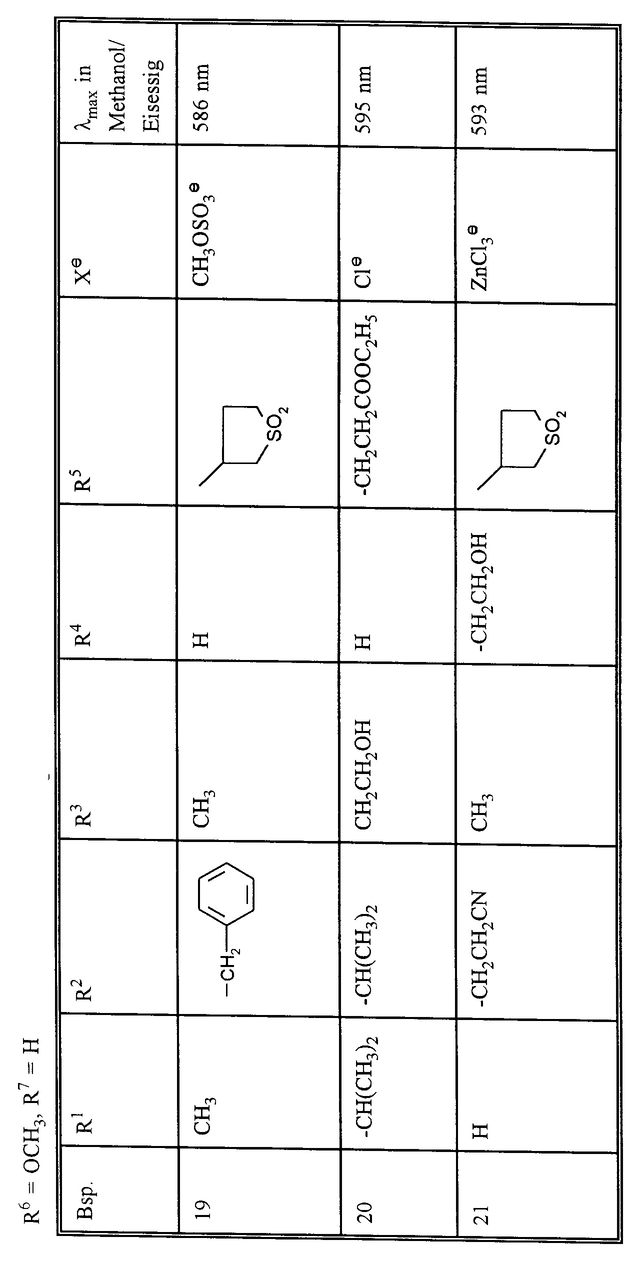

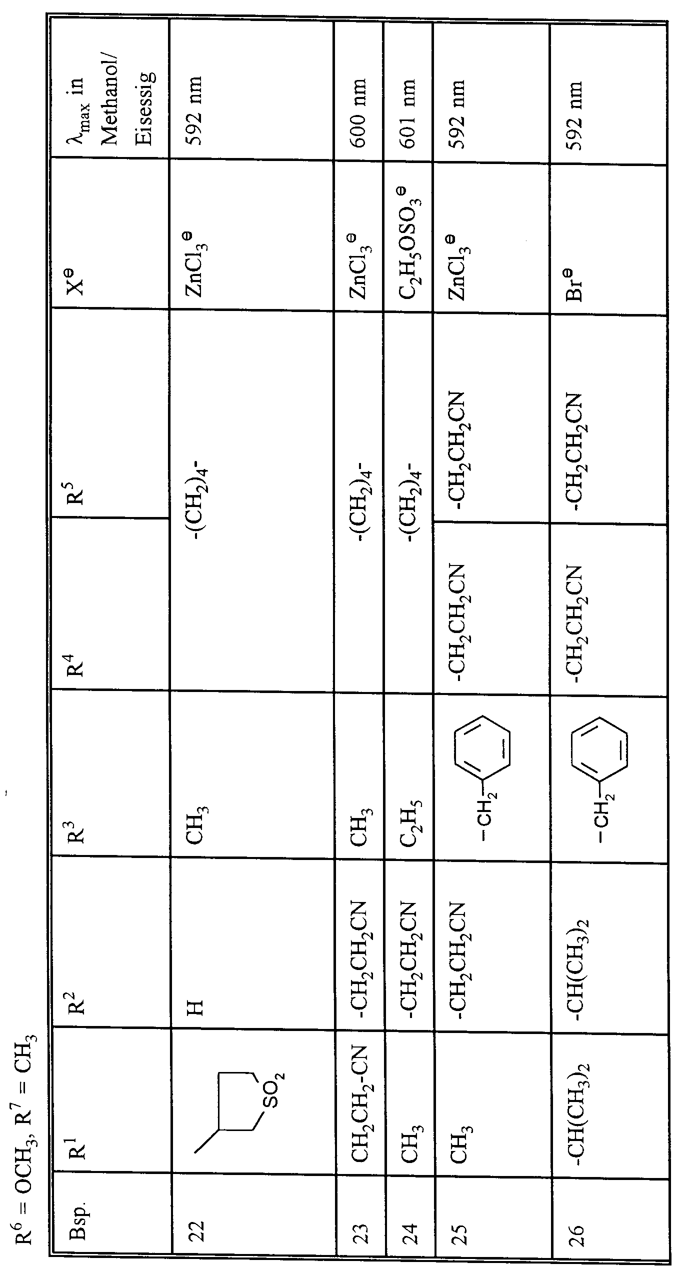

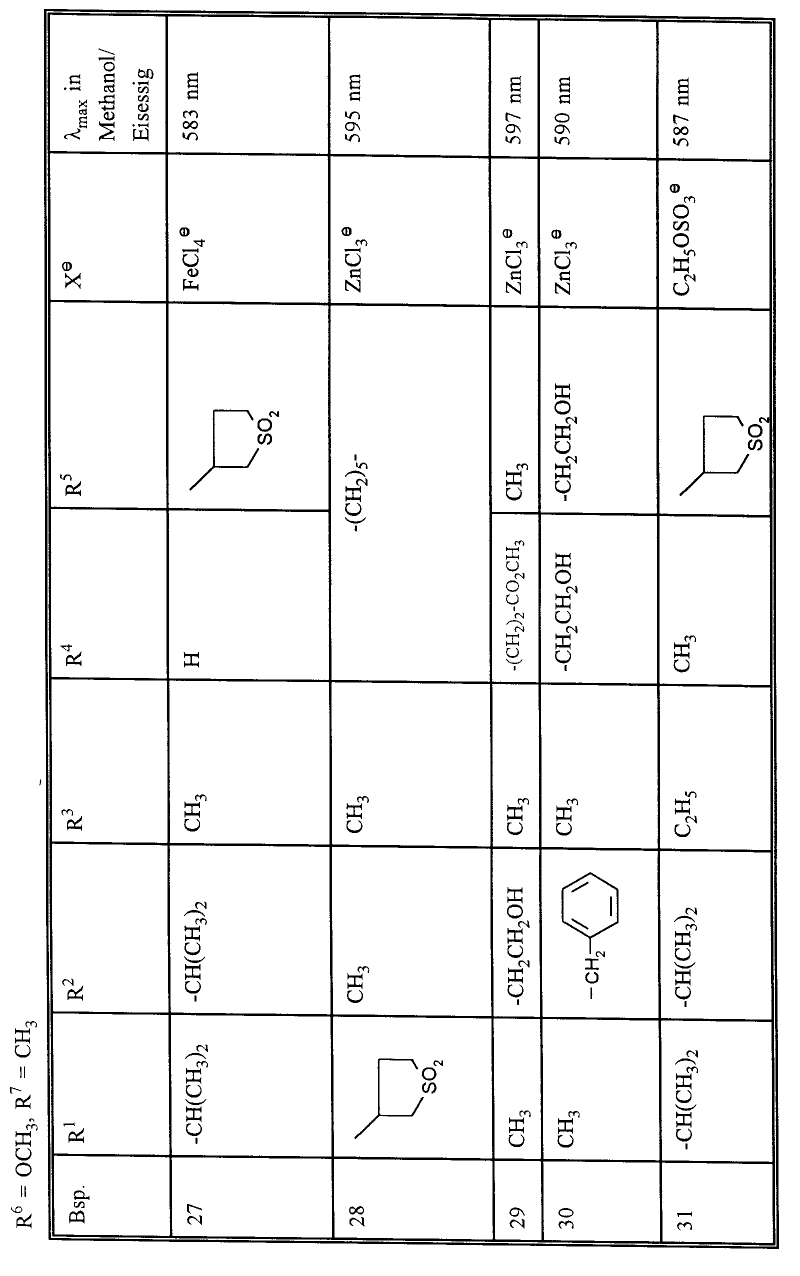

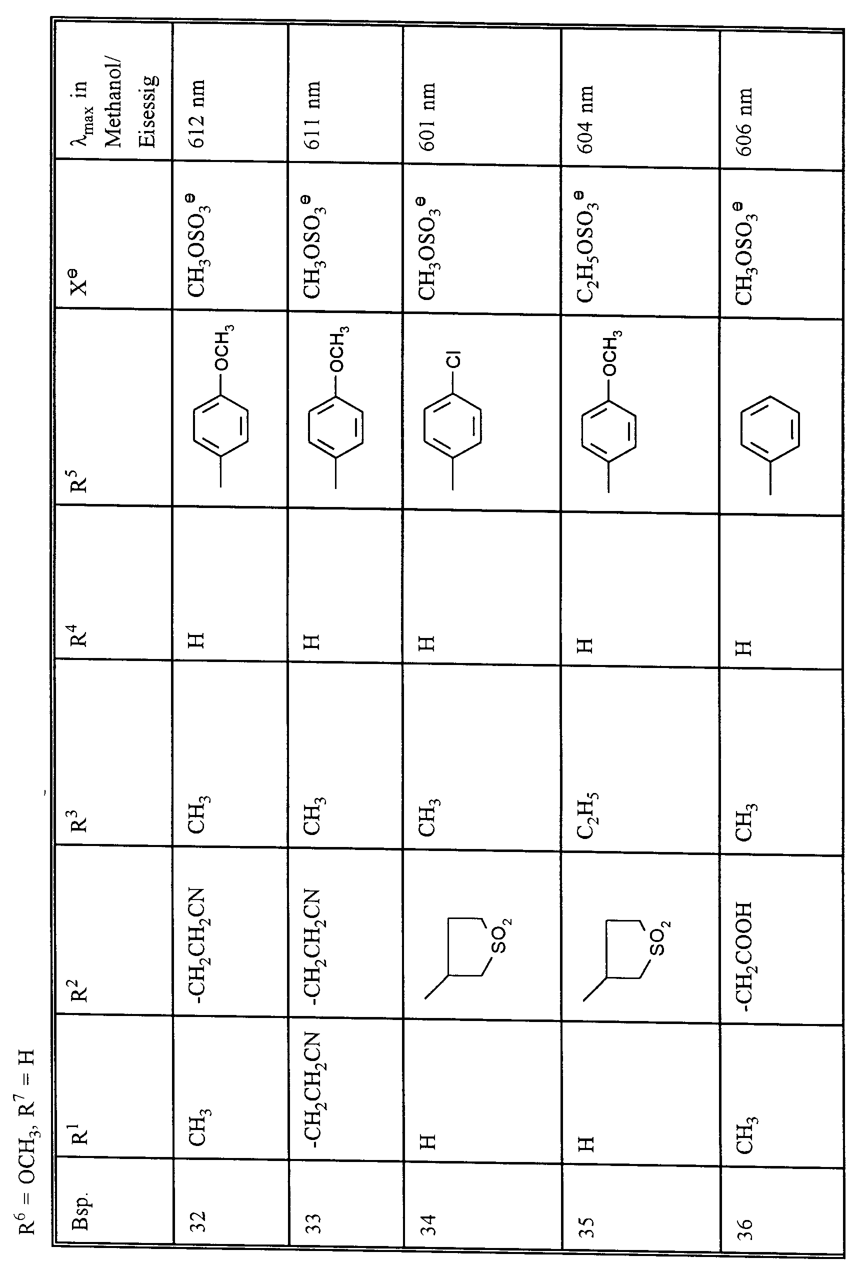

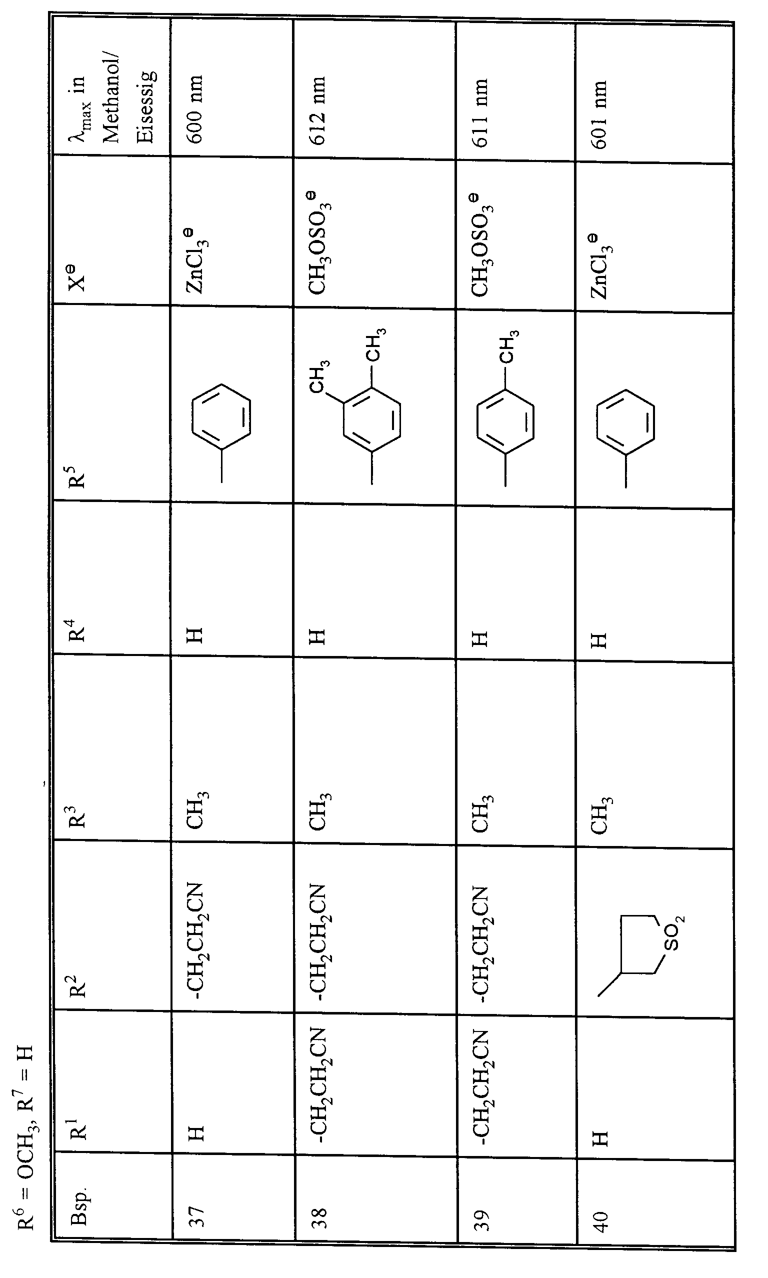

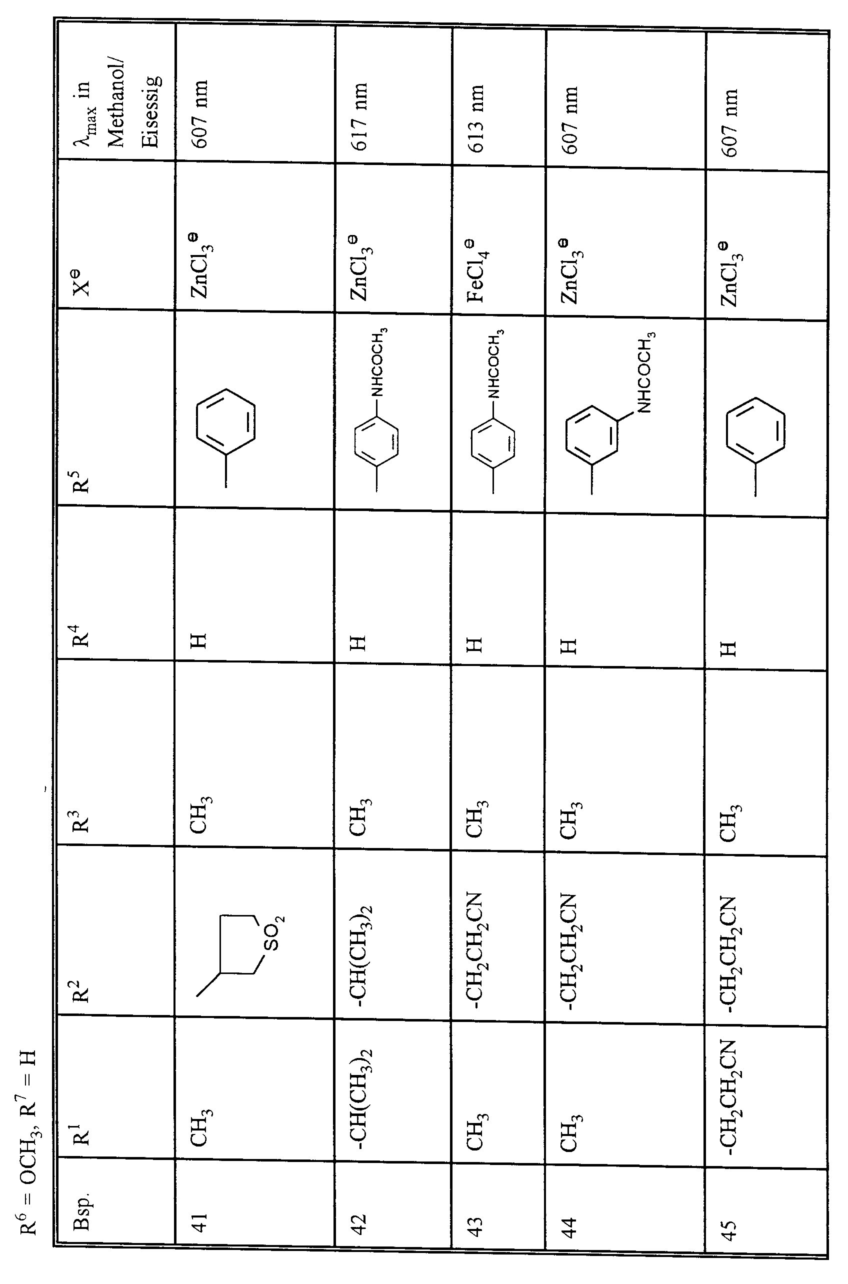

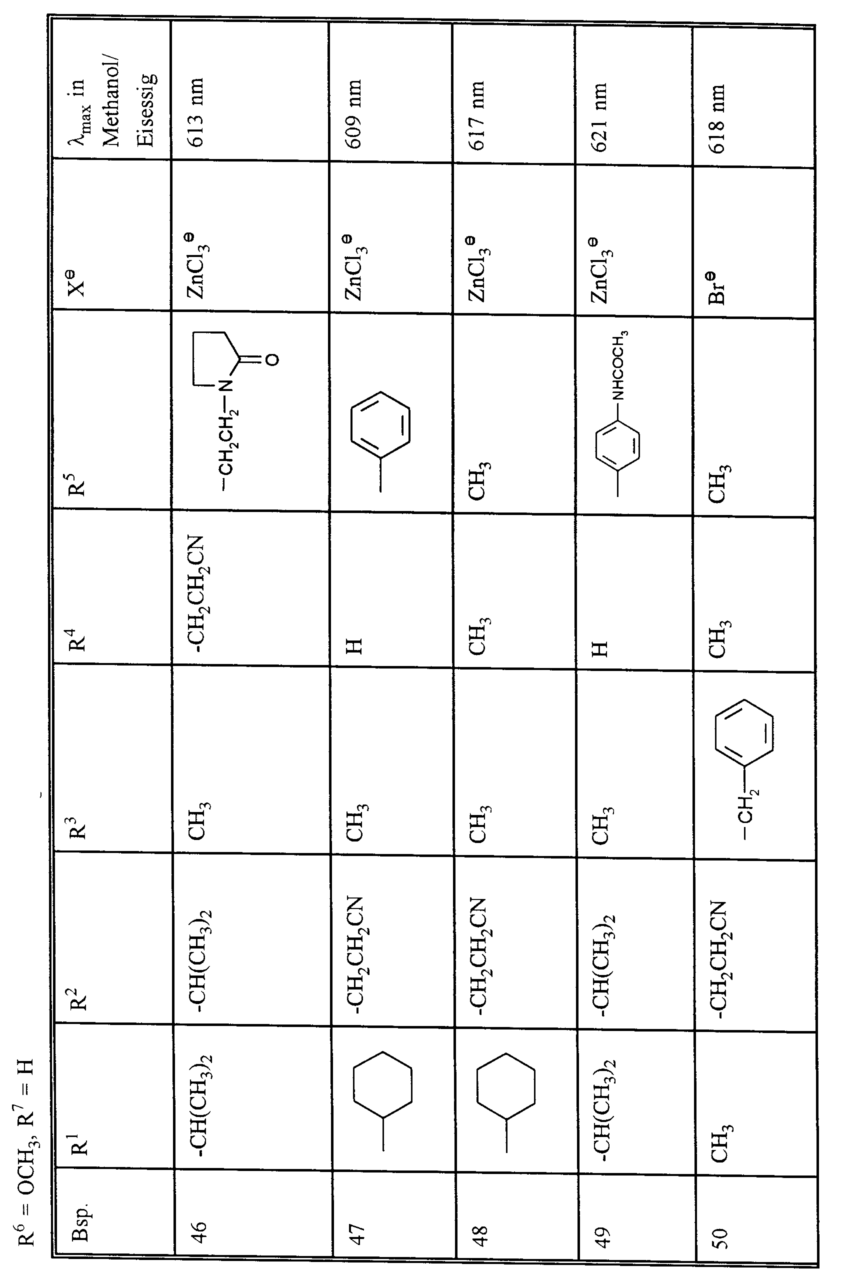

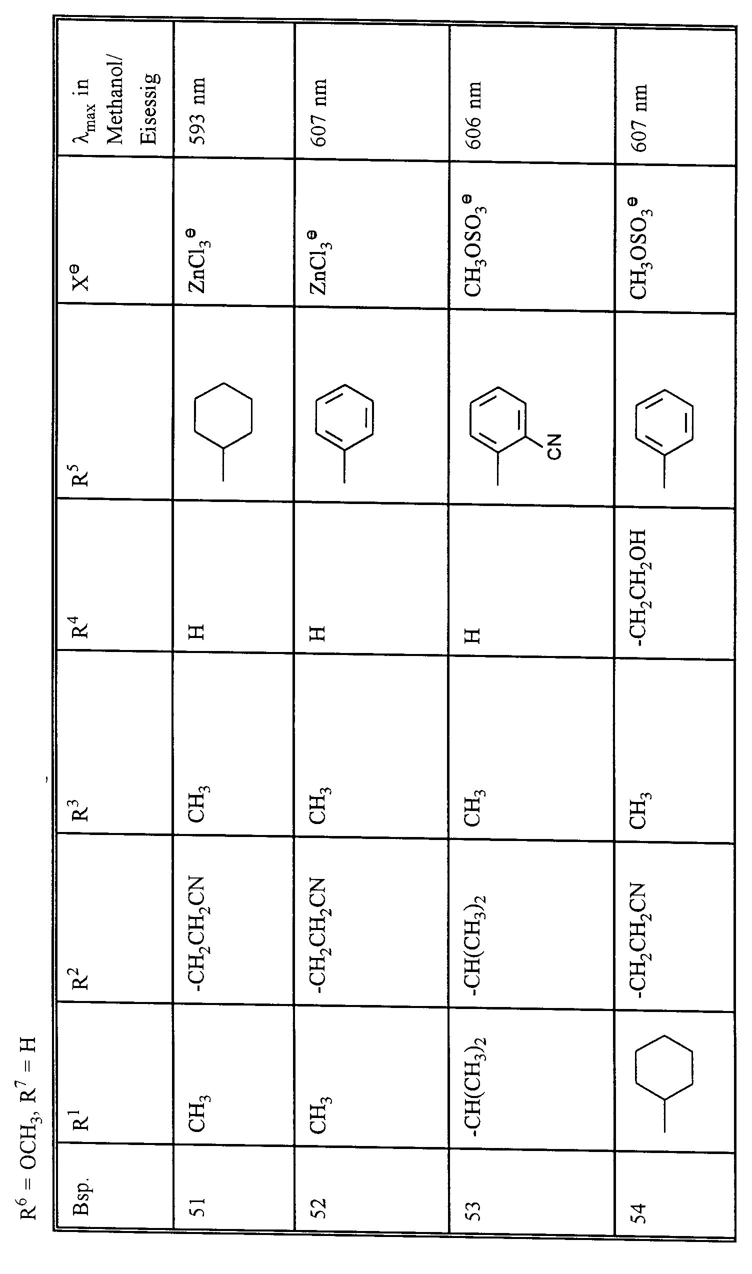

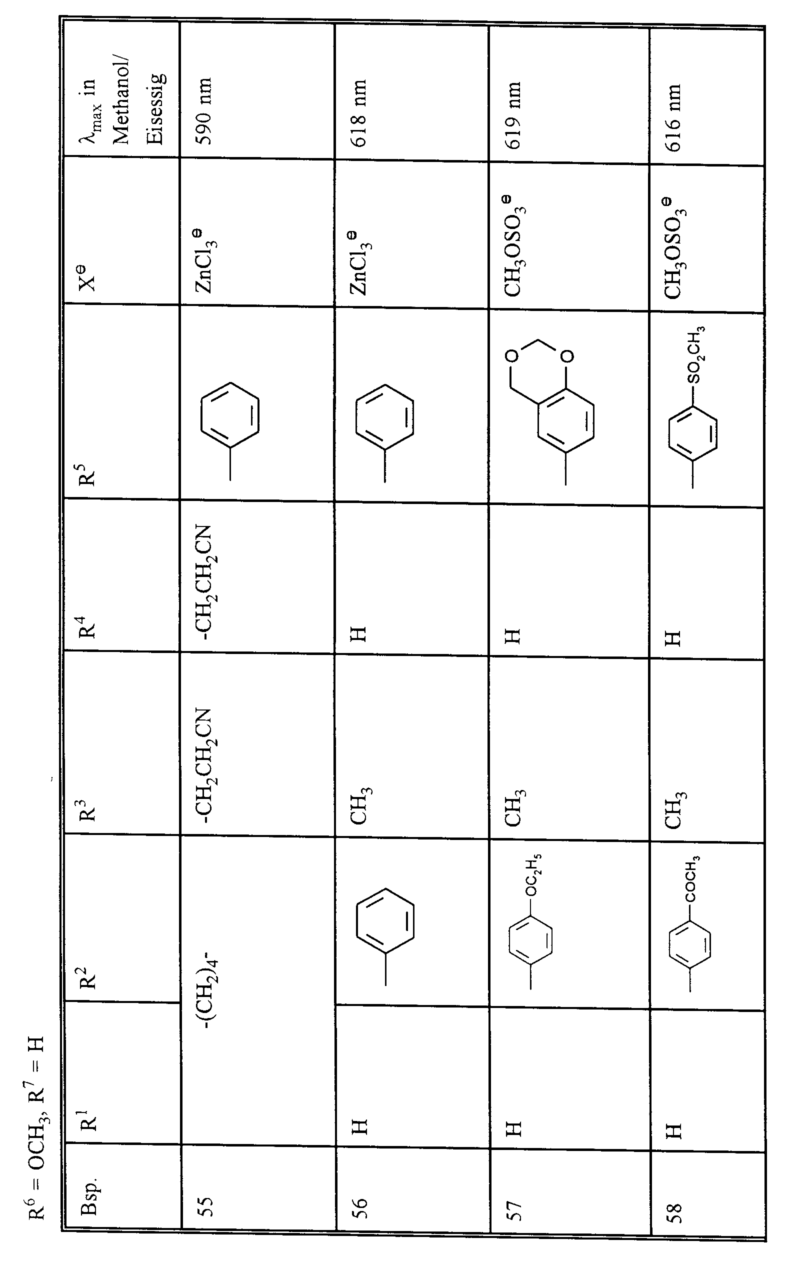

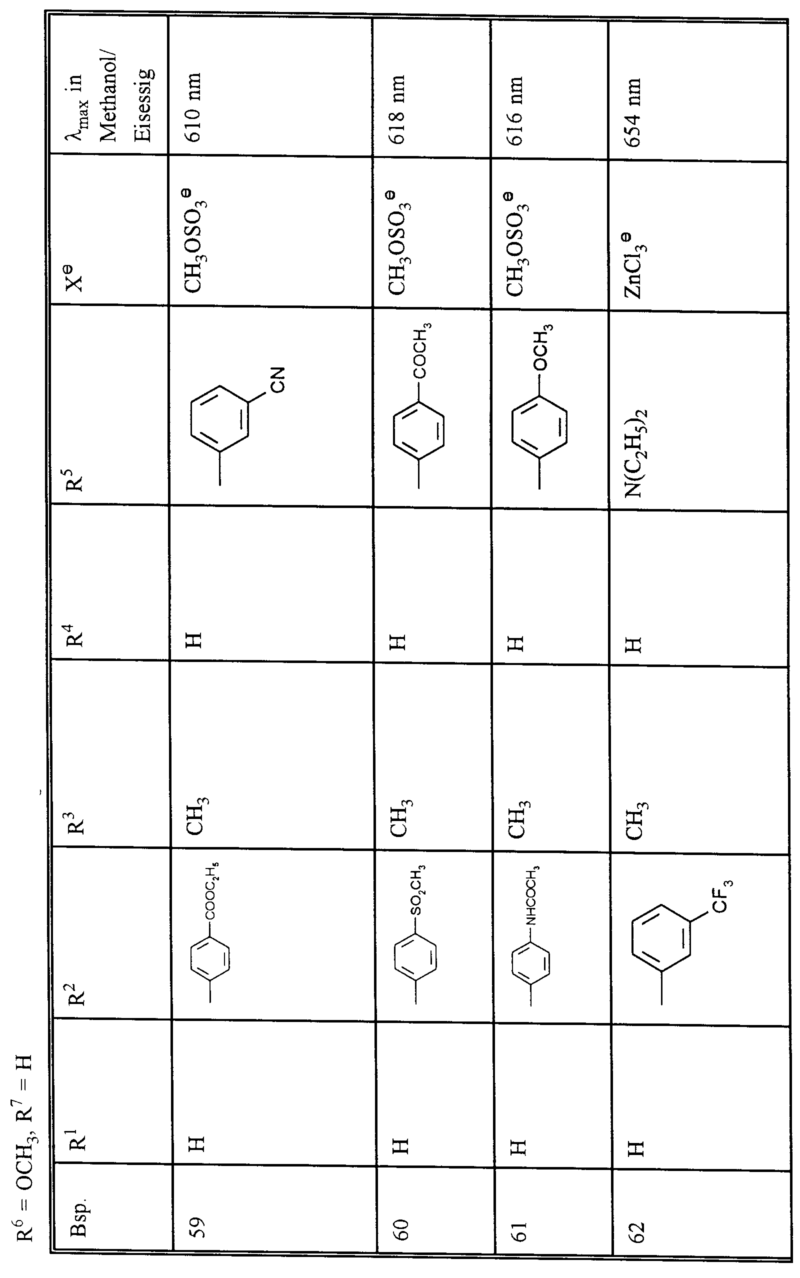

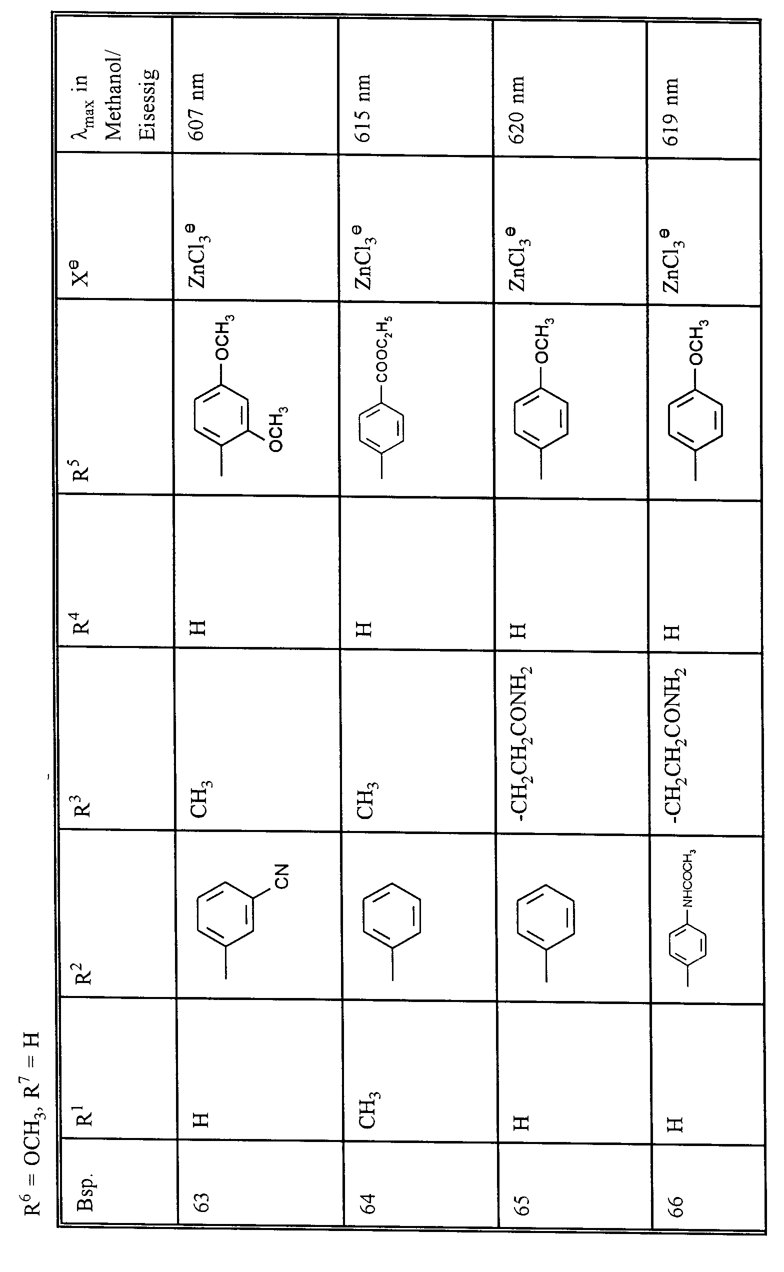

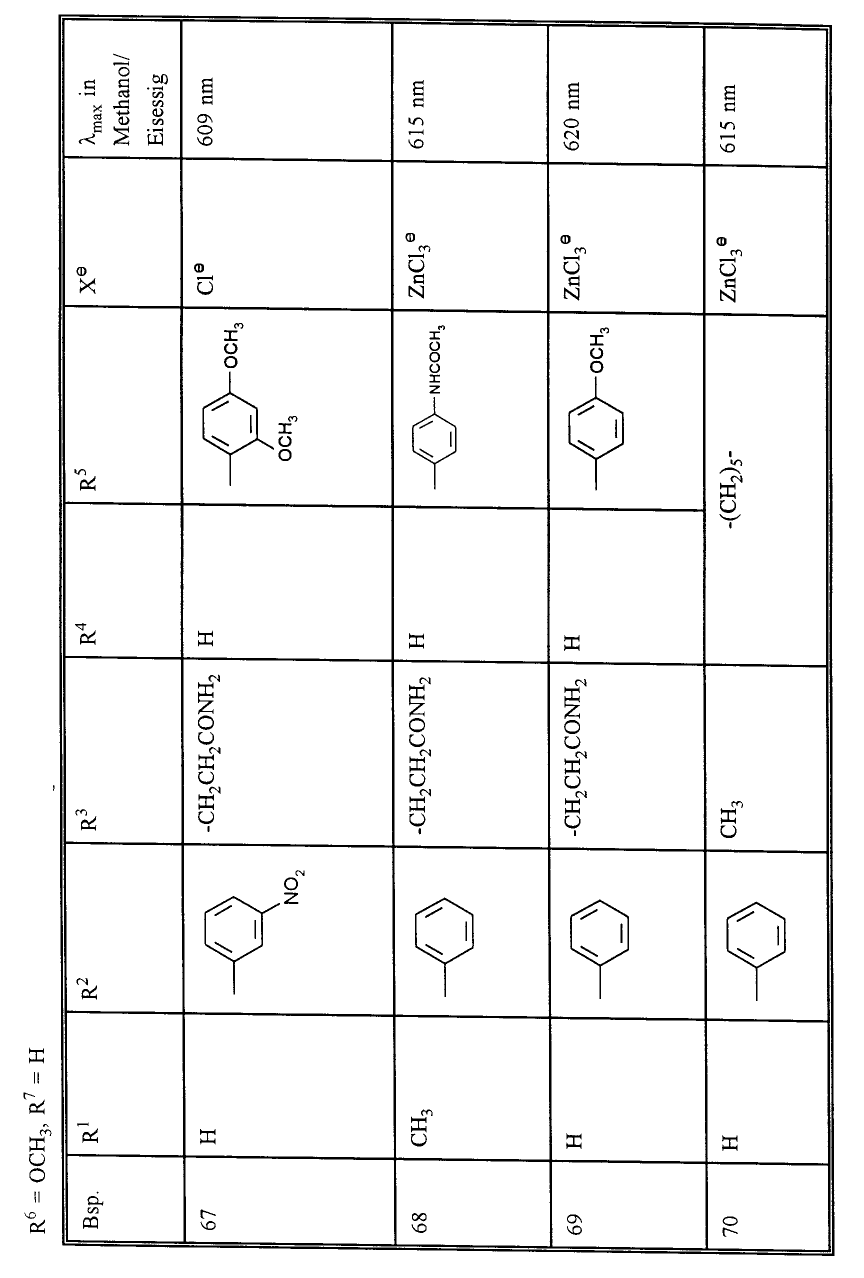

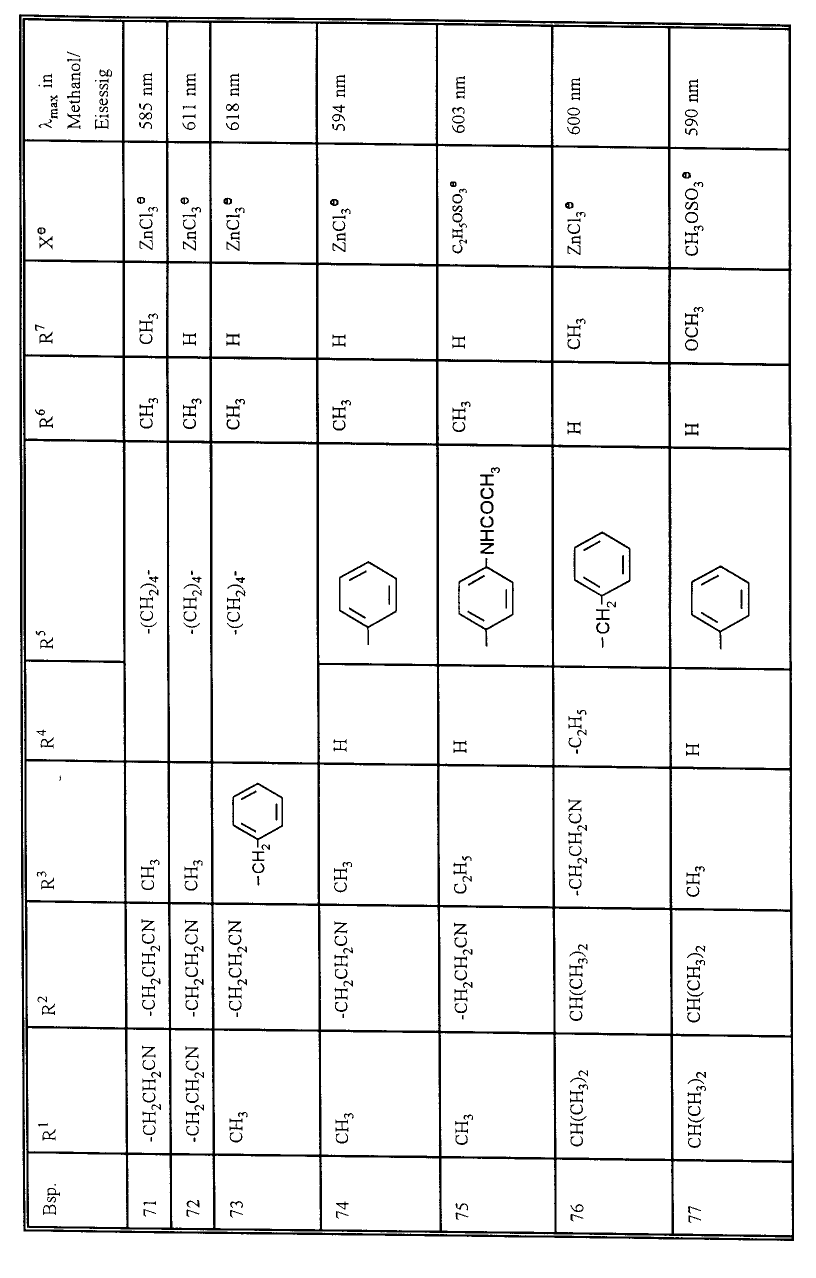

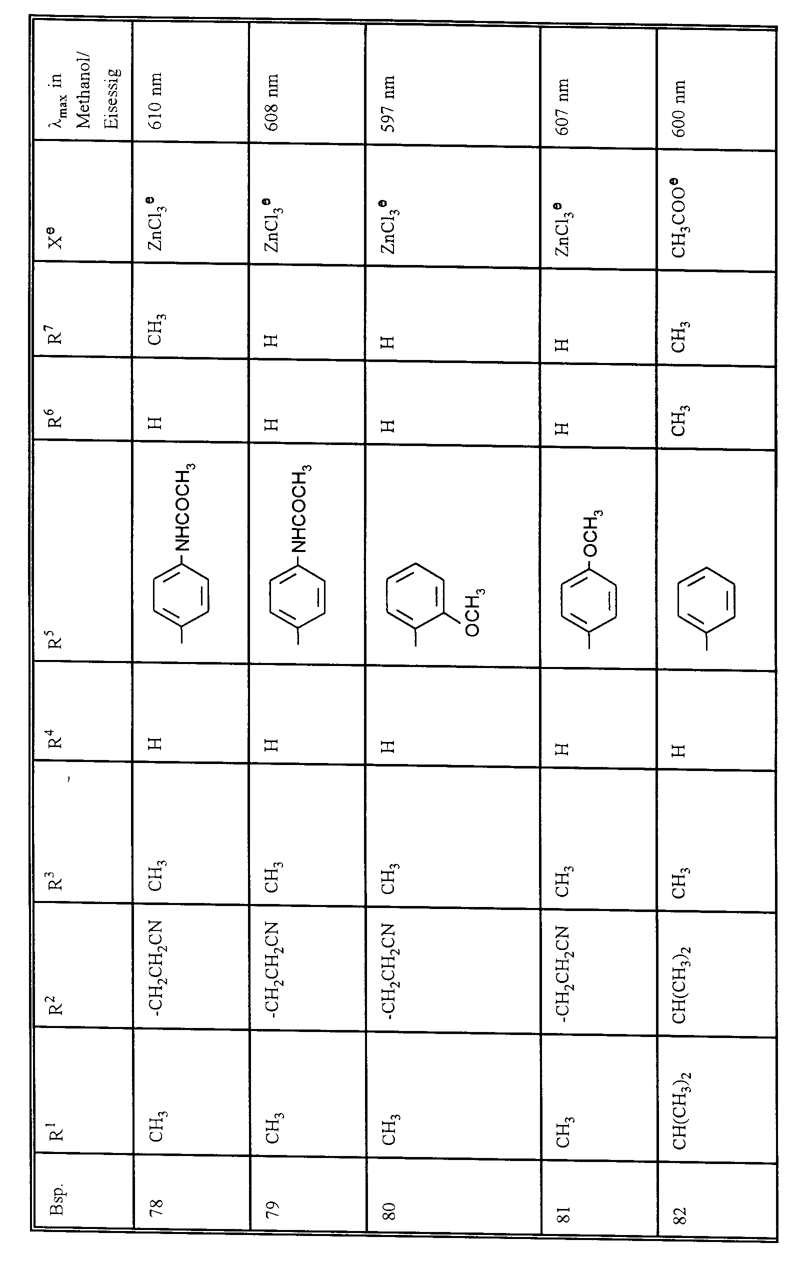

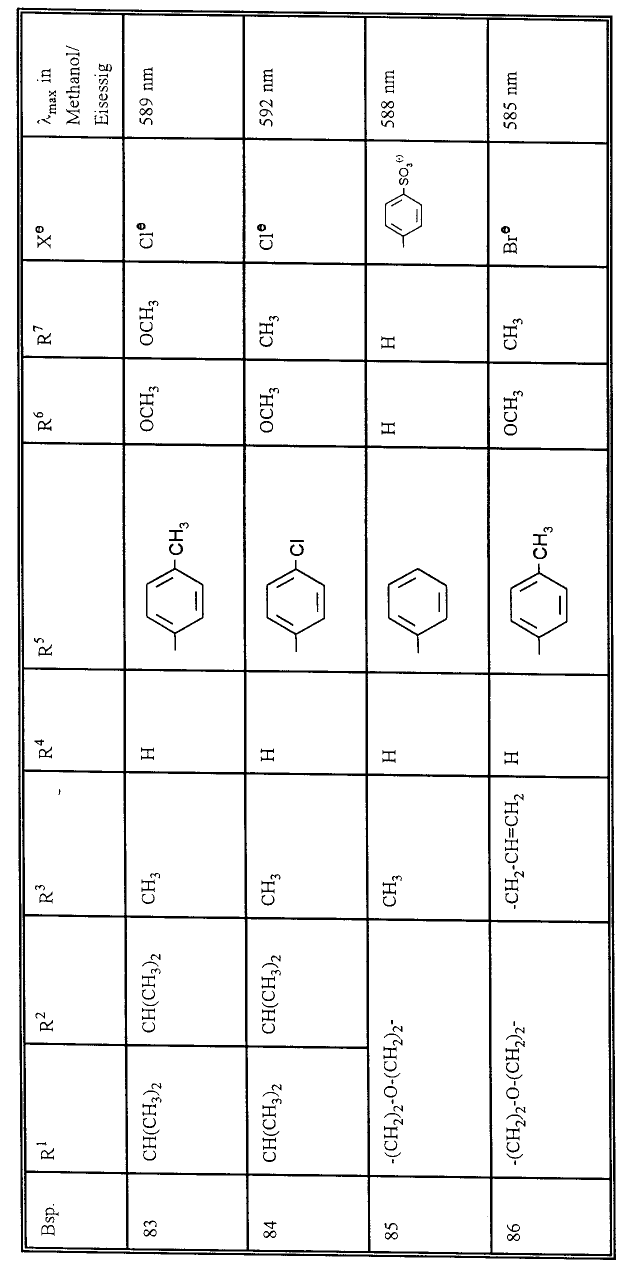

## Patentansprüche

1. Verfahren zur Herstellung kationischer 1,3,4-Thiadiazol-Farbstoffe der Formel (I) 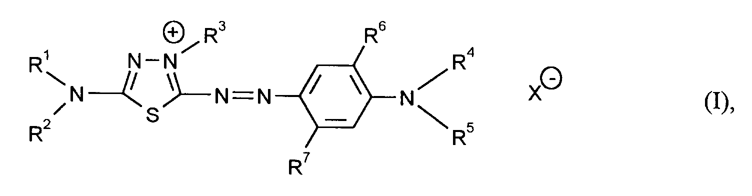 worin
R¹ und R² unabhängig voneinander Wasserstoff, Alkyl, Alkenyl, Cycloalkyl, Aralkyl, Aryl oder einen gegebenenfalls über Methylen oder Ethylen gebundenen heterocyclischen Rest bedeuten oder
NR¹R² Pyrrolidino, Piperidino, Morpholino oder Piperazino bedeutet,
R³ Alkyl, Alkenyl, Cycloalkyl, Aralkyl oder einen gegebenenfalls über Methylen oder Ethylen gebundenen heterocyclischen Rest bedeutet,
R⁴ und R⁵ unabhängig voneinander Wasserstoff, Alkyl, Alkenyl, Aralkyl, Aryl oder einen gegebenenfalls über Methylen oder Ethylen gebundenen heterocyclischen Ring bedeuten oder
NR⁴R⁵ Pyrrolidino, Piperidino, Morpholino oder gegebenenfalls durch Alkyl substituiertes Piperazino bedeutet und
R⁶ und R⁷ unabhängig voneinander Wasserstoff, C₁-C₄-Alkyl oder C₁-C₄-Alkoxy bedeuten,
X^{⊖} ein Anion bedeutet,
das dadurch gekennzeichnet ist, daß man kationische Farbstoffe der Formel (II) 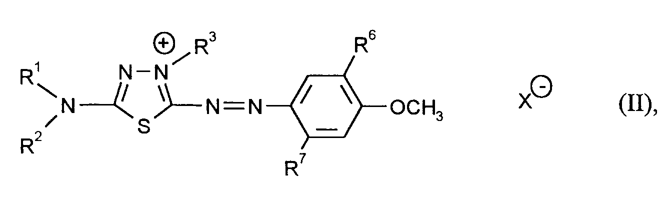 worin
R¹, R², R³, R⁶, R⁷und X^{⊖} die oben angegebene Bedeutung besitzen, mit Aminen der Formel (III) 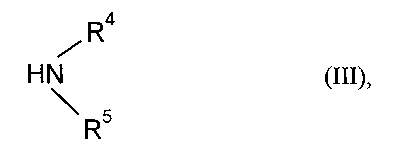 worin R⁴ und R⁵ die oben angegebene Bedeutung besitzen, umsetzt.

2. Verfahren zur Herstellung von 1,3,4-Thiadiazol-Farbstoffen der Formel (I) nach Anspruch 1, worin
R¹ und R² unabhängig voneinander Wasserstoff, unsubstituiertes oder durch Halogen, C₁-C₄-Alkoxy, Hydroxy, Cyano, Hydroxycarbonyl, C₁-C₄-Alkoxycarbonyl oder Phenyl substituiertes C₁-C₈-Alkyl oder C₂-C₆-Alkenyl, das jeweils unverzweigt oder verzweigt ist, C₄-C₇-Cycloalkyl oder unsubstituiertes oder durch bis zu drei Resten aus der Reihe Halogen, C₁-C₄-Alkyl, C₁-C₄-Alkoxy, Cyano oder Nitro substituiertes Phenyl, Tetramethylensulfonyl, Pyridylmethyl oder Pyridylethyl bedeuten oder
NR¹R² Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
R³ unsubstituiertes oder durch Halogen, C₁-C₄-Alkoxy, Hydroxy, Cyano, C₁-C₄-Alkoxycarbonyl oder Phenyl substituiertes C₁-C₈-Alkyl oder C₂-C₆-Alkenyl bedeutet, das jeweils unverzweigt oder verzweigt ist, C₄-C₇-Cycloalkyl, Pyridylmethyl oder Pyridylethyl bedeutet,
R⁴ und R⁵ unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl oder C₂-C₆-Alkenyl bedeutet, das jeweils unverzweigt oder verweigt ist oder unsubstituiertes oder durch bis zu drei Resten aus der Reihe Halogen, C₁-C₄-Alkyl, C₁-C₄-Alkoxy, Cyano oder Nitro substituiertes Phenyl, Tetramethylensulfonyl, Pyridylmethyl oder Pyridylethyl bedeuten, oder
NR⁴R⁵ Pyrrolidino, Piperidino, Morpholino, Piperazino oder N-C₁-C₄-Alkylpiperazino, wobei der Alkylrest unsubstituiert oder durch Halogen, Hydroxy oder Cyano substituiet bedeutet,
R⁶ Wasserstoff, Methyl oder Methoxy bedeutet,
R⁷ Wasserstoff oder Methyl bedeutet, und
X^{⊖} ein Anion bedeutet.

3. Verfahren nach Anspruch 1, dadurch gekennzeichnet, daß man die zur Herstellung der Farbstoffe der Formel (I) eingesetzten kationischen Farbstoffe der Formel (II) dadurch erhält, daß man Verbindungen der Formel (IV) 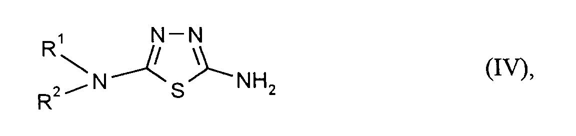
a) diazotiert,
b) auf Methoxybenzole der Formel (V) kuppelt und 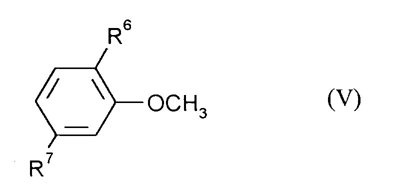
c) den so erhaltenen Farbstoff der Formel (VI) 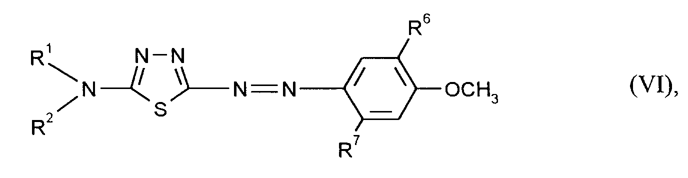 worin R¹, R², R⁶ und R⁷ die in Anspruch 1 angegebene Bedeutung besitzen, mit Quaternierungsmitteln der Formel (VII)
R³X (VII)
oder solchen Quaternierungsmitteln, die unter Reaktionsbedingungen Verbindungen der Formel (VII) bilden, worin R³ und X die in Anspruch 1 angegebene Bedeutung besitzen, umsetzt.

4. Verfahren nach Anspruch 1, dadurch gekennzeichnet, daß die Verbindungen der Formeln (II) und/oder (VI) nicht zwischenisoliert werden.

5. Verfahren nach Anspruch 1, dadurch gekennzeichnet, daß man die Umsetzung der kationischen Farbstoffe der Formel (II) mit Aminen der Formel (III) in Wasser und/oder einem polaren, mit Wasser mischbaren Lösungsmittel bei einer Temperatur zwischen 0°C und der Siedetemperatur des Reaktionsmediums durchführt.

6. Verfahren nach Anspruch 1, das dadurch gekennzeichnet ist, daß die kationischen Farbstoffe der Formel (II) mit 1 bis 3 Mol-Äquivalenten eines Amins der Formel (III) umgesetzt werden.

7. Kationische 1,3,4-Thiadiazol-Farbstoffe der Formel (I), 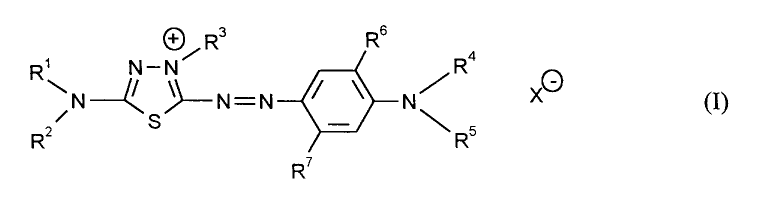 worin
R¹ und R² unabhängig voneinander Wasserstoff, Alkyl, Alkenyl, Cycloalkyl, Aralkyl oder einen gegebenenfalls über Methylen oder Ethylen gebundenen heterocyclischen Rest bedeuten oder
NR¹R² Pyrrolidino, Piperidino, Morpholino oder Piperazino bedeutet,
R³ Alkyl, Alkenyl, Cycloalkyl, Aralkyl oder einen gegebenenfalls über Methylen oder Ethylen gebundenen heterocyclischen Rest bedeutet,
R⁴ Wasserstoff, C₁-C₄-Alkyl, Cyanethyl, Hydroxyethyl oder Hydroxypropyl bedeutet,
R⁵ Cyanethyl, C₁-C₄-Alkoxycarbonylethyl, Hydroxycarbonylmethyl oder Tetramethylensulfonyl bedeutet oder
NR⁴R⁵ Pyrrolidino, Piperidino, Morpholino oder Piperazino bedeutet und
R⁶ Methoxy und R⁷ Wasserstoff bedeuten oder R⁶ Wasserstoff und R⁷ Methyl bedeuten, R¹ oder R² aber nicht für Aryl stehen und R⁵ nicht für Cyanethyl steht, wenn R⁷ für Methyl und R⁴ für Wasserstoff oder C₁-C₄-Alkyl stehen und
X^{⊖} ein Anion bedeutet.

8. Kationische 1,3,4-Thiadiazol-Farbstoffe gemäß Anspruch 7,
worin
R¹ und R² unabhängig voneinander Wasserstoff, Methyl, Ethyl, Propyl, 2-Propyl, Cyanethyl, Hydroxyethyl, Hydroxypropyl, Methoxyethyl, Benzyl, Allyl, Cyclopentyl, Cyclohexyl oder Tetramethylensulfonyl bedeuten oder
NR¹R² Pyrrolidino, Piperidino oder Morpholino bedeutet,
R³ Methyl, Ethyl, Cyanethyl, Hydroxyethyl, Hydroxypropyl oder Benzyl bedeutet,
R⁴ Wasserstoff, Methyl, Ethyl, Cyanethyl oder Hydroxyethyl bedeutet,
R⁵ Cyanethyl oder Tetramethylensulfonyl bedeutet oder
NR⁴R⁵ Pyrrolidino, Piperidino oder Morpholino bedeutet,
R⁶ Methoxy und R⁷ Wasserstoff bedeuten und
X^{⊖} ein Anion bedeutet.

9. Verwendung der Farbstoffe nach Anspruch 7 zum Färben und Bedrucken von Polymerisaten und Mischpolymerisaten des Acrylnitrils und Dicyanoethylens, sauer modifizierten Fasern aus Polyamid und Polyester, tannierten Zellulosematerialien, Papier, Seide und Leder, zur Herstellung von Schreibflüssigkeiten, Stempelflüssigkeiten, Kugelschreiberpasten und ink-jet-Tinten sowie im Gummidruck.

10. Polymerisate und Mischpolymerisate des Acrylnitrils und Dicyanoethylens, sauer modifiziertes Polyamid und Polyester, tannierte Zellulosematerialien, Papier, Seide, Leder, Kugelschreiberpasten, Schreibflüssigkeiten, Stempelflüssigkeiten und ink-jet-Tinten, die dadurch gekennzeichnet sind, daß sie mindestens einen erfindungsgemäßen kationischen 1,3,4-Thiadiazolfarbstoff nach Anspruch 7 enthalten.
